# EUROPEAN PATENT APPLICATION

(11) **EP 4 823 052 A1**
(43) Date of publication of application: **14.10.2026**
(21) Application number: 24910561.0
(22) Date of filing: 03.12.2024
(51) Int. Cl.: H04L 41/0894

(54) **COMMUNICATION METHOD, APPARATUS AND SYSTEM**

(30) Priority: 27.12.2023 CN 202311830074
(71) Applicant: Huawei Technologies Co., Ltd., Shenzhen, Guangdong 518129 (CN)
(72) Inventor: YANG, Yanmei, Shenzhen, Guangdong 518129 (CN)
(74) Representative: Isarpatent
(86) International application number: PCT/CN2024/136324
(87) International publication number: WO 2025/139629

(57) **Abstract**

A communication method, apparatus, and system are provided, and may be applied to the field of communication technologies. The method includes: An access communication and computing node obtains compute task information, where the compute task information includes a performance requirement of a first compute task. The access communication and computing node determines a first compute resource based on a first communication resource and the performance requirement of the first compute task, where the first communication resource is a communication resource used for the first compute task, and the first compute resource is used to execute the first compute task. The access communication and computing node determines a target node based on the first compute resource, where the target node is configured to execute the first compute task. The target node includes the access communication and computing node and/or one or more neighboring nodes of the access communication and computing node. In the technical solutions of this application, a network device (for example, the access communication and computing node) can determine, based on a communication resource used for a compute task, a compute resource required for the compute task, and further determine a node that provides the compute resource, thereby helping ensure performance of the compute task, for example, reducing an execution latency of the compute task.

## Description

This application claims priority to Chinese Patent Application No. 202311830074.3, filed with the China National Intellectual Property Administration on December 27, 2023 and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

An application client in a terminal device invokes software program code in a cloud server to execute a compute task, which may be implemented in a manner of developing a service based on a broadband network of an operator (over the top, OTT). In the foregoing scenario, a network device provides only an internet protocol (internet protocol, IP) data packet forwarding function required in a process of invoking the software program code, and the network device does not perform compute resource management and/or scheduling of a compute node.

With standardization of hardware computing devices and algorithm models and maturation of software technologies such as artificial intelligence and cloud computing, the amount of data increases explosively, and the requirement for computational power also increases, leading to uneven allocation of compute resources. To resolve the problem of uneven allocation of compute resources, using a network to schedule and allocate compute resources becomes a current development trend. In the current technical background, a computing first network (computing first networking, CFN) may be used to schedule and/or allocate compute resources, and route a compute task of a terminal device to a best-matched computing location (or compute node) through computing routing.

However, when a routing device in the CFN selects a compute node for the compute task of the terminal device, usually, only two factors are considered: whether each compute node has a software program corresponding to a compute function required by the terminal device, and single-hop network transmission performance from a current node to a next-hop node in a routing network. The routing device in the CFN cannot obtain a status of a radio bearer between the terminal device and the compute node. As a result, when selecting the compute node, the routing device cannot consider overall communication performance from the terminal device to different compute nodes. Latency performance is used as an example. If a communication latency from the terminal to each compute node is excessively high, a latency for the terminal device to obtain an output result of the compute task cannot meet a service requirement.

In view of this, a communication solution that can ensure performance (for example, a low latency) of a compute task and meet a service requirement of the compute task needs to be urgently developed.

### SUMMARY

This application provides a communication method, apparatus, and system, to determine, based on a communication resource authorized for a compute task, a compute resource required for the compute task, and further determine a node that provides the compute resource, thereby helping ensure performance of the compute task.

According to a first aspect, a communication method is provided. The method may be performed by a network device having a computing capability or a component (for example, a chip or a module) of the network device having the computing capability. For example, the network device may be an access network device, or referred to as an access communication and computing node. Alternatively, the method may be performed by a compute device having a communication capability or a component (for example, a chip or a module) of the compute device having the communication capability. The following uses an example in which the method is performed by an access communication and computing node for description. During actual implementation, an execution body of the method may have another name.

The method includes: obtaining compute task information, where the compute task information includes a performance requirement of a first compute task; determining a first compute resource based on a first communication resource and the performance requirement of the first compute task, where the first communication resource is a communication resource used for the first compute task, and the first compute resource is used to execute the first compute task; and determining a target node based on the first compute resource, where the target node is configured to execute the first compute task.

The communication resource used for the first compute task may be understood as a communication resource pre-allocated by the access communication and computing node to the first compute task, or a communication resource pre-reserved by the access communication and computing node for the first compute task. When the first compute task is actually executed, the pre-allocated or pre-reserved communication resource may be used to receive a function invocation and/or data of the first compute task, and send an execution result of the first compute task. The communication resource used for the first compute task may also be referred to as a communication resource authorized for the first compute task.

In some implementations, the compute task information further includes first feature information of the first compute task, and the first feature information indicates computational complexity and/or a computational amount of the first compute task.

In the foregoing technical solution, the access communication and computing node may determine, based on a wireless communication resource authorized by the access communication and computing node for the first compute task, communication performance (for example, a latency and a data rate) between a terminal device and the access communication and computing node, and then determine a more appropriate target node for executing the first compute task, to ensure execution performance of the first compute task and meet the performance requirement of the first compute task, for example, ensure that a total latency for executing the first compute task is within a service requirement range, or a data processing speed matches a transmission rate of source data to be processed.

With reference to the first aspect, in some implementations of the first aspect, the first compute task includes at least one compute subtask, and determining the target node based on the first compute resource includes: sending first request information to a core network, where the first request information is used to request to use a second compute resource to execute the at least one compute subtask, and the first compute resource includes the second compute resource; receiving first response information from the core network, where the first response information indicates a first node, and the first node provides the second compute resource for the first compute task; and determining, based on the first response information, that the target node includes the first node.

In some implementations, the core network stores node resource information and function deployment information, where the node resource information indicates a communication relationship or connection relationship between the access communication node and a neighboring node of the access communication node, and the function deployment information indicates an available compute resource of the neighboring node of the access communication node.

In the foregoing technical solution, the core network has comprehensive information about a communication relationship between nodes and an available compute resource of each node, so that a collaborative node that executes the first compute task can be quickly determined. This helps reduce communication overheads of determining the target node by the access communication and computing node.

With reference to the first aspect, in some implementations of the first aspect, the first compute task includes at least one compute subtask, and determining the target node based on the first compute resource includes: sending first request information to a second node, where the first request information is used to request to use a second compute resource to execute the at least one compute subtask, and the first compute resource includes the second compute resource; receiving first response information from the second node, where the first response information indicates that the second node determines to execute the first compute task, and the second node provides the second compute resource for the first compute task; and determining, based on the first response information, that the target node includes the second node.

In the foregoing technical solution, the access communication and computing node may determine, without depending on information stored in a core network, a collaborative node that executes the first compute task. This helps reduce communication complexity in a process of determining the target node.

It should be noted that, that the first compute resource includes the second compute resource may be understood as follows: The second compute resource is the same as the first compute resource, that is, the second compute resource may be all compute resources required by the first compute task. Alternatively, the second compute resource may be a part of the first compute resource, that is, the second compute resource is a part of compute resources required by the first compute task.

In some implementations, the first request information may include information about the second compute resource, that is, the second compute resource required by the first compute task is directly indicated to the first node or the second node.

In some implementations, the second compute resource is a compute resource still required by the first compute task other than a compute resource that can be provided by the access communication and computing node for the first compute task, and the first request information may include information about the first communication resource, information about a compute resource that has been provided by the access communication and computing node for the first compute task, and at least one of the following: an identifier of the first compute task, the first feature information of the first compute task, and the performance requirement of the first compute task. In this way, the core network or the second node may determine, based on the first request information, a remaining compute resource required by the first compute task.

In some implementations, the first request information may include at least one of the following: an identifier of the at least one compute subtask, feature information of the at least one compute subtask, and a performance requirement of the at least one compute subtask. The feature information of the at least one compute subtask indicates computational complexity and/or a computational amount of each of the at least one compute subtask, or the feature information of the at least one compute subtask indicates overall computational complexity and/or an overall computational amount of the at least one compute subtask. In this way, the core network or the second node may determine, based on the first request information, the second compute resource required by the at least one compute task.

With reference to the first aspect, in some implementations of the first aspect, the first request information includes information about the first communication resource and at least one of the following: an identifier of the first compute task, the first feature information of the first compute task, and the performance requirement of the first compute task, where the first feature information indicates the computational complexity and/or the computational amount of the first compute task.

The first request information may include the information about the first communication resource and the identifier of the first compute task, so that the core network or the second node determines the performance requirement and/or the first feature information of the first compute task in the function deployment information based on the identifier of the first compute task, and further determines the second compute resource based on the first communication resource and the performance requirement of the first compute task, or determines the second compute resource based on the first communication resource and the first feature information. In this technical solution, the first request information needs to carry only the information about the first communication resource and the identifier of the first compute task, and compared with a case in which the first request information carries the performance requirement and/or the first feature information of the first compute task, signaling overheads of the first request information can be reduced.

Alternatively, the first request information may include the performance requirement and/or the first feature information of the first compute task, and the information about the first communication resource. In this way, the core network or the second node may directly determine the second compute resource based on the performance requirement of the first compute task and the first communication resource, or determine the second compute resource based on the first feature information and the first communication resource, and the core network or the second node does not need to query storage resources for the first feature information or the performance requirement of the first compute resource. This helps reduce processing complexity of the core network.

Alternatively, the first request information may include the performance requirement and/or the first feature information of the first compute task, and the information about the first communication resource. In this way, the core network or the second node may quickly determine the second compute resource and whether the core network or the second node can provide the second compute resource. This helps improve efficiency in a process of requesting the collaborative node to process the first compute task.

It should be noted that when the first request information includes both the first feature information and the performance requirement of the first compute task, accuracy of the second compute resource determined by the core network or the second node is improved.

With reference to the first aspect, in some implementations of the first aspect, the method further includes: receiving second request information from a terminal device, where the second request information is used to request to invoke a function for executing the first compute task; and sending the second request information to the target node.

For example, the second request information may include the function invocation of the first compute task.

In the foregoing technical solution, when the target node includes the first node or the second node, the second request information is sent to the collaborative node, so that the collaborative node executes the first compute task.

With reference to the first aspect, in some implementations of the first aspect, the method further includes: receiving first data from the terminal device, where the first data includes data requested to be processed by the first compute task; and sending the first data to the target node.

In the foregoing technical solution, when the target node includes the first node or the second node, the first data is sent to the collaborative node, so that the collaborative node executes the first compute task to process related data.

With reference to the first aspect, in some implementations of the first aspect, the method further includes: updating or creating a communication connection, where the communication connection is used to carry the function invocation and/or data transmission of the first compute task.

In some implementations, the function invocation of the first compute task that is carried in the communication connection may include the second request information, and data of the first compute task that is carried in the communication connection may include the first data.

With reference to the first aspect, in some implementations of the first aspect, the first compute task includes the at least one compute subtask, and the method further includes: selecting at least one function instance from a plurality of function instances, or triggering deployment of at least one function instance, where the at least one function instance is associated with a third compute resource, the third compute resource is used to execute the at least one compute subtask, and the first compute resource includes the third compute resource.

That the at least one function instance is associated with the third compute resource may be understood as follows: The third compute resource is invoked by using the at least one function instance. For example, the access communication and computing node invokes the third compute resource in a virtual machine by using the at least one function instance.

It should be noted that, that the first compute resource includes the third compute resource may be understood as follows: The third compute resource is the same as the first compute resource, that is, the third compute resource may be all compute resources required by the first compute task. Alternatively, the third compute resource may be a part of the first compute resource, that is, the third compute resource is a part of compute resources required by the first compute task.

In the foregoing technical solution, the access communication and computing node provides all or a part of compute resources for the first compute task based on an available compute resource of the access communication and computing node. This helps improve a completion speed of the first compute task and reduce impact of a communication latency introduced by requesting a compute resource from the neighboring node on performance of the first compute task.

With reference to the first aspect, in some implementations of the first aspect, the method further includes: receiving a first message from a third node, where the first message indicates to switch at least one compute task, the at least one compute task includes the first compute task, the at least one compute task is provided with a communication resource by a fourth node, and the third node includes the fourth node; and sending a response message of the first message to the third node.

In some implementations, the fourth node is a source access communication and computing node, and the third node may also be the core network.

In some implementations, if the first compute task is a compute task that is being executed when handover occurs, obtaining the compute task information may further include: obtaining the compute task information by using the first message.

In the foregoing technical solution, when handover occurs, the first message may be used to determine compute tasks for which communication resources may need to be provided subsequently. This helps the access communication and computing node plan communication resources in advance.

In some implementations, the method further includes: sending a second message to a target access communication and computing node, where the second message indicates to switch at least one compute task, and the at least one compute task includes the first compute task; and receiving a response message of the second message from the target access communication and computing node.

With reference to the first aspect, in some implementations of the first aspect, the first message includes at least one of the following: a performance requirement of each of the at least one compute task; feature information of each compute task, where the feature information indicates computational complexity and/or a computational amount of each compute task; information about a node that provides a compute resource for each compute task; or information about an available compute resource of a node that provides a compute resource for each compute task.

In some implementations, the first message may further include information about a compute task that is being executed, for example, an identifier of the compute task that is being executed, and a collaborative node that provides a compute resource for the compute task that is being executed.

In the foregoing technical solution, the first message is used to receive compute task-related information from the source access communication and computing node, so that the terminal device does not need to notify the access communication and computing node of the compute task-related information via the core network. This can reduce processing complexity in a process in which the terminal device requests to invoke a compute task. In addition, if a compute task is being executed when handover occurs, the first message is used to receive the compute task-related information from the source access communication and computing node. This helps ensure continuity of the compute task that is being executed, to reduce impact of handover on performance of the compute task.

With reference to the first aspect, in some implementations of the first aspect, the response message of the first message includes at least one of the following: function invocation information, where the function invocation information includes an address for remotely invoking the at least one compute task by the terminal device; or node information, where the node information indicates a node that is newly added relative to the fourth node and that is configured to provide a compute resource for the at least one compute task.

In some implementations, the address for remotely invoking the at least one compute task by the terminal device may include: an IP address of the target access communication and computing node and/or a port number of the target access node.

In some implementations, the function invocation information further includes compute task invocation identification information, and compute task invocation identifiers may include: a function name of a compute function required for executing the compute task, an application programming interface (application programming interface, API) name or a universal identifier of the compute function required for executing the compute task, a temporary identifier allocated to the compute task, and the like.

In the foregoing technical solution, information about the function invocation and/or the newly added collaborative node is sent to the source access communication and computing node by using the response message of the first message, so that the source access communication and computing node determines, in a handover process, an address that can continue to be provided for remote invocation of the at least one compute task.

With reference to the first aspect, in some implementations of the first aspect, the method further includes: receiving first indication information from the core network, where the first indication information indicates at least one of the following: a communication resource is provided for the at least one compute task; a communication resource and a compute resource are provided for the at least one compute task; or the at least one compute task is a compute task authorized by the core network, where the at least one compute task includes the first compute task.

In the foregoing technical solution, the access communication and computing node may determine, based on the first indication information, compute tasks for which communication resources need to be provided.

With reference to the first aspect, in some implementations of the first aspect, the first indication information further includes the feature information and/or the performance requirement of each of the at least one compute task, and the feature information indicates the computational complexity and/or the computational amount of each compute task.

In some implementations, obtaining the compute task information may include: obtaining the compute task information based on the first indication information.

For example, the first indication information further indicates that the access communication and computing node provides the compute resource for the first compute task. In this case, the access communication and computing node obtains the compute task information from the first indication information.

For another example, the access communication and computing node stores content included in the first indication information, and further receives an invocation request of the first compute task from the terminal device, where the invocation request includes the identifier of the first compute task. In this case, the access communication and computing node obtains, based on the identifier of the first compute task, the compute task information from the stored content included in the first indication information.

In the foregoing technical solution, the access communication and computing node may obtain, based on the first indication information, the feature information and/or the performance requirement of each of the at least one compute task, so that the access communication and computing node subsequently determines a compute resource required by a compute task, and/or determines a target node for the compute task.

With reference to the first aspect, in some implementations of the first aspect, the method further includes: receiving third request information from the terminal device, where the third request information is used to request to invoke the first compute task, and the third request information includes the identifier of the first compute task; and obtaining the compute task information includes: obtaining the compute task information based on the identifier of the first compute task.

In some implementations, the third request information is mainly used to start the first compute task, where starting of the first compute task includes providing or allocating a communication resource and a compute resource for the first compute task. The third request information may be further used to request execution of a first part of subtasks in the first compute task, that is, request to invoke some functions to execute the first part of subtasks. The second request information may be used to request execution of a second part of subtasks in the first compute task, that is, request to invoke some functions to execute the second part of subtasks. The first part of subtasks and the second part of subtasks may overlap, or may not overlap.

In other words, the third request information may include one or more function invocations of the first compute task, that is, the third request information may include the second request information, or the third request information may not include the second request information.

In the foregoing technical solution, the access communication and computing node may determine, based on a request of the terminal device, the target node that provides the compute resource for the first compute task.

With reference to the first aspect, in some implementations of the first aspect, the performance requirement of the first compute task indicates a computation latency for executing the first compute task, or a total latency for executing the first compute task, where the total latency includes a communication latency and the computation latency.

When the performance requirement of the first compute task indicates the total latency of the first compute task, the foregoing technical solution helps reduce an end-to-end latency during execution of the first compute task, that is, a total latency from sending an invocation request of the compute task by the terminal device to receiving an execution result of the compute task by the terminal device.

With reference to the first aspect, in some implementations of the first aspect, the method further includes: receiving a network access request of the terminal device, where the network access request is used to request to access a current node.

According to a second aspect, a communication method is provided. The method may be performed by a network device having a compute task control capability, or may be performed by a component of the network device having the compute task control capability. For example, the network device may be a core network.

The method includes: receiving fourth request information from a terminal device, where the fourth request information includes information about at least one compute task that the terminal device requests to invoke; and sending second response information to the terminal device based on the fourth request information, where the second response information includes function invocation information of an access communication and computing node, and the function invocation information includes an address for remotely invoking the at least one compute task by the terminal device and/or compute task invocation identification information.

For example, the compute task invocation identification information is identification information used to identify a compute task, for example, a function name of a compute function required for executing the compute task, an API name or a universal identifier of the compute function required for executing the compute task, and a temporary identifier allocated to the current compute task. In the foregoing technical solution, the core network may determine, for the compute task that the terminal device requests to invoke, the function invocation information of the access communication and computing node, to ensure successful invocation of the compute task.

With reference to the second aspect, in some implementations of the second aspect, the method further includes: sending first indication information to a fifth node, where the first indication information indicates at least one of the following: the fifth node provides a communication resource for the at least one compute task; the fifth node provides a communication resource and a compute resource for the at least one compute task; or the at least one compute task is a compute task authorized by the core network.

For example, the fifth node may be a device that performs the method in any possible implementation of the first aspect.

With reference to the second aspect, in some implementations of the second aspect, the first indication information includes feature information and/or a performance requirement of each of the at least one compute task, and the feature information indicates computational complexity and/or a computational amount of each compute task.

With reference to the second aspect, in some implementations of the second aspect, the at least one compute task includes a second compute task, and the method further includes: determining, based on an available compute resource of the fifth node, an available compute resource of each of at least one node, and at least one of second feature information of the second compute task and a performance requirement of the second compute task, that a sixth node provides a compute resource for the second compute task, where the second feature information indicates computational complexity and/or a computational amount of the second compute task, and the at least one node includes the sixth node; and sending first information to the sixth node, where the first information includes information about the second compute task.

In the foregoing technical solution, the core network directly (or actively) determines a collaborative node that executes the second compute task. This helps reduce computational load and processing complexity of the access communication and computing node.

In some implementations, the first information includes information about a compute resource required by the second compute task, and the compute resource required by the second compute task may be determined by the core network based on the second feature information and/or the performance requirement of the second compute task.

With reference to the second aspect, in some implementations of the second aspect, the first information includes an identifier of the second compute task and at least one of the second feature information and the performance requirement of the second compute task.

In some implementations, the performance requirement of the second compute task indicates a computation latency required for the second compute task. Alternatively, the performance requirement of the second compute task may indicate a total latency required for the second compute task, and the total latency includes a communication latency and a computation latency.

In the foregoing technical solution, the identifier of the second compute task is notified to the sixth node by using the first information, which helps the sixth node prepare a function instance for the second compute task; and notifying the sixth node, by using the first information, of the performance requirement and/or the second feature information of the second compute task helps the sixth node determine the compute resource required by the second compute task.

With reference to the second aspect, in some implementations of the second aspect, the first indication information further includes information indicating that the sixth node provides the compute resource for the second compute task.

In the foregoing technical solution, the first indication information carries the information indicating that the sixth node provides the compute resource for the second compute task, so that when receiving a function invocation and/or data of the second compute task, the access communication and computing node forwards the function invocation and/or the data of the second compute task to the sixth node in a timely manner. This helps ensure performance of the second compute task.

With reference to the second aspect, in some implementations of the second aspect, the method further includes: obtaining node resource information, where the node resource information indicates a connection relationship between the fifth node and the at least one node; and determining the sixth node in the at least one node based on the node resource information.

With reference to the second aspect, in some implementations of the second aspect, the method further includes: obtaining function deployment information, where the function deployment information indicates the available compute resource of the fifth node and the available compute resource of each node.

With reference to the second aspect, in some implementations of the second aspect, the at least one compute task includes a first compute task, the first compute task includes at least one compute subtask, and the method further includes: receiving first request information from the fifth node, where the first request information is used to request to use a second compute resource to execute the at least one compute subtask; determining the second compute resource based on the first request information; determining a first node based on the available compute resource of each of the at least one node and the second compute resource, where the at least one node includes the first node; and sending first response information to the fifth node, where the first response information indicates that the first node provides the second compute resource for the first compute task.

With reference to the second aspect, in some implementations of the second aspect, the method further includes: sending second information to the first node, where the second information indicates that the first node is to provide the second compute resource for the first compute task.

In some implementations, the second information may include information about the second compute resource, so that the first node determines, for the first compute task based on the second information, a function instance associated with the second compute resource.

In some other implementations, the second information may include information about a first communication resource and at least one of the following: an identifier of the first compute task, first feature information of the first compute task, and a performance requirement of the first compute task, so that the first node determines the second compute resource required by the first compute task, and further determines, for the first compute task, a function instance associated with the second compute resource.

With reference to the second aspect, in some implementations of the second aspect, the first request information includes: the information about the first communication resource and at least one of the following: the identifier of the first compute task, the first feature information of the first compute task, and the performance requirement of the first compute task, where the first communication resource is a communication resource used by the fifth node for the first compute task, and the first feature information indicates computational complexity and/or a computational amount of the first compute task.

With reference to the second aspect, in some implementations of the second aspect, the performance requirement of the first compute task indicates a computation latency for executing the first compute task, or a total latency for executing the first compute task, where the total latency includes a communication latency and the computation latency.

For beneficial effects that are not described in detail in the second aspect, refer to the descriptions in the first aspect. Details are not described herein again.

According to a third aspect, a communication method is provided. The method may be performed by a network device having a computing capability, or may be performed by a component (for example, a chip or a module) of the network device having the computing capability. For example, the network device may be a neighboring network device of the network device that performs the method in any implementation of the first aspect, for example, a neighboring node of the access communication and computing node. Alternatively, the method may be performed by a compute device having a communication capability or a component (for example, a chip or a module) of the compute device having the communication capability.

The method includes: receiving third information from a seventh node, where the third information includes information used to determine a compute resource, and the compute resource is used to execute a first compute task; determining the compute resource based on the third information; and determining, based on the compute resource and an available compute resource of a current node, whether to provide the compute resource for the first compute task.

In some implementations, the seventh node may be an access communication and computing node, or may be a core network. When the seventh node is an access communication and computing node, the third information is the first request information in the first aspect or the second aspect. When the seventh node is a core network, the third information is the first information or the second information in the second aspect.

For example, the current node is a collaborative node.

In the foregoing technical solution, the collaborative node may determine, based on the third information and an available compute resource of the collaborative node, whether to provide the compute resource for the first compute task.

With reference to the third aspect, in some implementations of the third aspect, the third information includes information about a first communication resource and at least one of the following: an identifier of the first compute task, first feature information of the first compute task, and a performance requirement of the first compute task, where the first communication resource is a communication resource used by a fifth node for the first compute task, and the first feature information indicates computational complexity and/or a computational amount of the first compute task.

For example, the third information is the first request information or the first information.

In some implementations, the third information may further include information about a compute resource required by the first compute task. In this case, the third information is the first information or the second information.

With reference to the third aspect, in some implementations of the third aspect, the method further includes: determining one or more function instances when the current node provides the compute resource for the first compute task, where at least one of the one or more function instances is associated with the first compute task.

In the foregoing technical solution, the collaborative node may prepare a plurality of function instances for the first compute task. When the first compute task is actually executed, at least one function instance is selected from the plurality of function instances to execute the compute task. This helps provide sufficient compute resources for the first compute task when the first compute task is actually executed, thereby ensuring performance of the first compute task.

With reference to the third aspect, in some implementations of the third aspect, the method further includes: receiving second request information from the fifth node, where the second request information is used to request to invoke a function for executing the first compute task; and executing the first compute task based on the second request information and the at least one of the one or more function instances.

With reference to the third aspect, in some implementations of the third aspect, the method further includes: receiving first data from the fifth node, where the first data is data requested to be processed by the first compute task; and processing the first data by using the at least one of the one or more function instances.

With reference to the third aspect, in some implementations of the third aspect, the method further includes: sending third response information to the seventh node, where the third response information indicates that the current node provides the compute resource for the first compute task, or the current node does not provide the compute resource for the first compute task.

In the foregoing technical solution, the third response information is sent to the seventh node, so that the seventh node determines whether to re-determine a collaborative node. When the third response information indicates that the current collaborative node does not provide the compute resource for the first compute task, the seventh node re-determines a collaborative node. This helps ensure successful execution of the first compute task. When the third response information indicates that the current collaborative node provides the compute resource for the first compute task, the seventh node does not re-determine a collaborative node. This helps reduce processing complexity of the seventh node.

For beneficial effect that is not described in detail in the third aspect, refer to the descriptions in the first aspect or the second aspect. Details are not described herein again.

According to a fourth aspect, a communication method is provided. The method may be performed by a terminal device, or may be performed by a component (for example, a chip or a module) of the terminal device.

The method includes: sending fourth request information to a core network, where the fourth request information includes information about at least one compute task that the terminal device requests to invoke; and receiving second response information from the core network, where the second response information includes function invocation information of a fifth node, and the function invocation information includes an address for remotely invoking the at least one compute task and/or compute task invocation identification information.

In the foregoing technical solution, the terminal device determines, based on the second response information, a destination address of an access communication and computing node, where the destination address is used to receive a remote invocation request of the at least one compute task. Further, the terminal device can send a function invocation and/or data of the compute task to the destination address.

With reference to the fourth aspect, in some implementations of the fourth aspect, the method further includes: sending a network access request to the fifth node, where the network access request is used to request to access a current node.

With reference to the fourth aspect, in some implementations of the fourth aspect, the at least one compute task includes a first compute task, and the method further includes: sending second request information to the fifth node, where the second request information is used to request to invoke a function for executing the first compute task.

With reference to the fourth aspect, in some implementations of the fourth aspect, the at least one compute task includes a first compute task, and the method further includes: sending first data to the fifth node, where the first data is data requested to be processed by the first compute task.

In some implementations, the at least one compute task includes the first compute task, and the method further includes: sending third request information to the fifth node, where the third request information is used to request to invoke the first compute task, and the third request information includes an identifier of the first compute task.

In some implementations, the method further includes: receiving a handover command from a current access communication and computing node, where the handover command includes function invocation information of a target access communication and computing node, and the function invocation information indicates the address for remotely invoking the at least one compute task by the terminal device.

In some implementations, the first compute task is a compute task that is being executed by the current access communication and computing node, and the method further includes: sending, based on the handover command, a function invocation and/or data of the first compute task to the address of the target access communication and computing node that is indicated by the function invocation information.

For beneficial effect that is not described in detail in the fourth aspect, refer to the descriptions in the first aspect, the second aspect, or the third aspect. Details are not described herein again.

According to a fifth aspect, an embodiment of this application provides a communication apparatus. The communication apparatus may be a device or an apparatus with a chip, a device or an apparatus integrated with a circuit, or a chip, a chip system, a module, or a control unit in the device or apparatus. This is not specifically limited in this application. It should be noted that the communication apparatus mentioned in this application may be the communication apparatus, or may be a chip, a functional module, an integrated circuit, or the like that is in the communication apparatus and that completes the method provided in this application. This is not specifically limited in this application. The apparatus is configured to perform the method according to any one of the first aspect to the fourth aspect. Specifically, the apparatus may include a unit and/or module configured to perform the method according to any implementation of the first aspect to the fourth aspect.

When the apparatus is configured to perform the method according to any implementation of the first aspect, the apparatus may include an obtaining unit (or an obtaining module) and a processing unit (or a processing module). Optionally, the apparatus may further include a transceiver unit (or a transceiver module). In some implementations, the transceiver unit includes an obtaining unit, and the obtaining unit may be a receiving unit in the transceiver unit.

When the apparatus is configured to perform the method according to any implementation of the second aspect to the fourth aspect, the apparatus may include a transceiver unit and a processing unit.

In some implementations, the processing unit may be at least one processor. The transceiver unit may be a transceiver or an input/output interface. Optionally, the transceiver may be a transceiver circuit. Optionally, the input/output interface may be an input/output circuit.

In some implementations, the communication apparatus is a chip, a chip system, or a circuit in a terminal device or a network device (for example, an access communication and computing node, a core network, or a collaborative node). The transceiver unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a sixth aspect, an embodiment of this application provides a processor, configured to perform the methods according to the foregoing aspects. Operations such as sending and receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

With reference to the sixth aspect, in some implementations of the sixth aspect, the processor is disposed in a communication apparatus, and the communication apparatus is any one of a terminal device, an access communication and computing node, a core network, or a collaborative node.

According to a seventh aspect, an embodiment of this application provides a communication system. The communication system includes a terminal device, an access communication and computing node, and a core network. The access communication and computing node may perform the method according to any implementation of the first aspect. The core network may perform the method according to any implementation of the second aspect. The terminal device may perform the method according to any implementation of the fourth aspect.

With reference to the seventh aspect, in some implementations of the seventh aspect, the communication system further includes a collaborative node, and the collaborative node may perform the method according to any implementation of the third aspect.

According to an eighth aspect, an embodiment of this application provides a computer-readable storage medium. The computer-readable storage medium stores instructions or program code. When the instructions or the program code is executed by a processor, the method according to any implementation of the first aspect to the fourth aspect may be implemented.

According to a ninth aspect, an embodiment of this application provides a computer program product including instructions. When the computer program product runs on a computer, the computer is enabled to perform the method according to any implementation of the first aspect to the fourth aspect.

According to a tenth aspect, an embodiment of this application provides a chip. The chip includes a processor and a communication interface. The processor reads, through the communication interface, instructions stored in a memory, to perform the method according to any implementation of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any implementation of the first aspect to the fourth aspect.

For specific beneficial effect brought by the fifth aspect to the tenth aspect, refer to the descriptions of the beneficial effect in the first aspect to the fourth aspect. Details are not described herein again.

### BRIEF DESCRIPTION OF DRAWINGS

FIG. 1 is a diagram of a communication system to which an embodiment of this application is applied;
FIG. 2 is a diagram of another communication system to which an embodiment of this application is applied;
FIG. 3A to FIG. 3C are a schematic flowchart of a communication method according to an embodiment of this application;
FIG. 4A and FIG. 4B are another schematic flowchart of a communication method according to an embodiment of this application;
FIG. 5 is still another schematic flowchart of a communication method according to an embodiment of this application;
FIG. 6 is still another schematic flowchart of a communication method according to an embodiment of this application;
FIG. 7 is still another schematic flowchart of a communication method according to an embodiment of this application;
FIG. 8A and FIG. 8B show still another schematic flowchart of a communication method according to an embodiment of this application;
FIG. 9 is a diagram of a communication apparatus according to an embodiment of this application;
FIG. 10 is another diagram of a communication apparatus according to an embodiment of this application;
FIG. 11 is still another diagram of a communication apparatus according to an embodiment of this application; and
FIG. 12 is a diagram of a chip system according to an embodiment of this application.

### DESCRIPTION OF EMBODIMENTS

The following describes technical solutions of this application with reference to accompanying drawings.

For ease of understanding embodiments of this application, the following descriptions are provided first.
1. Unless otherwise specified, "a plurality of" means two or more than two.
2. Unless otherwise specified or there is a logical conflict, terms and/or descriptions in different embodiments of this application are consistent and may be mutually referenced, and technical features in different embodiments may be combined based on an internal logical relationship thereof to form a new embodiment.
3. Various numbers in this application are merely used for differentiation for ease of description, but are not intended to limit the protection scope of this application. Sequence numbers in this application do not mean an execution sequence, and an execution sequence of processes should be determined based on functions and internal logic of the processes. For example, in the specification, claims, and accompanying drawings of this application, terms "first", "second", "third", "fourth", and various other term numbers (if existent) are intended to distinguish between similar objects, but do not necessarily indicate a specific order or sequence. Data used in such a way is interchangeable in appropriate circumstances, so that embodiments described herein can be implemented in an order other than the order illustrated or described herein.
   In addition, any embodiment or design solution described with "example" or "for example" in this application should not be explained as being more preferred or having more advantages than another embodiment or design solution. Exactly, use of the terms such as "example" or "for example" is intended to present a related concept in a specific manner for ease of understanding.
4. Terms "include", "have", and any variants thereof are intended to cover the non-exclusive inclusion. For example, a process, method, system, product, or device that includes a series of steps or units is not necessarily limited to those expressly listed steps or units, but may include other steps or units not expressly listed or inherent to the process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in a plurality of manners, for example, but not limited to, a manner of directly enabling the to-be-enabled information. For example, the to-be-enabled information or an index of the to-be-enabled information is enabled. Alternatively, the to-be-enabled information may be indirectly enabled by enabling other information, where there is an association relationship between the other information and the to-be-enabled information. Alternatively, only a part of the to-be-enabled information may be enabled, and the other part of the to-be-enabled information is known or pre-agreed on. For example, specific information may alternatively be enabled based on an arrangement sequence of pieces of information that is pre-agreed on (for example, specified in a protocol), to reduce enabling overheads to some extent. In addition, a common part of all pieces of information may be further identified and enabled in a unified manner, to reduce enabling overheads caused by separately enabling same information.
6. In this application, "pre-configure" may include "predefine", for example, "define in a protocol". "Predefine" may be implemented by pre-storing, in a device (for example, including network elements), corresponding code, a corresponding table, or other related information that may be used for indication. A specific implementation thereof is not limited in this application.
7. "Store" or "save" in this application may mean "be stored in one or more memories". The one or more memories may be separately disposed, or may be integrated into an encoder, a decoder, a processor, or a communication apparatus. Alternatively, a part of the one or more memories may be separately disposed, and the other part of the one or more memories may be integrated into a decoder, a processor, or a communication apparatus. The memory may be a storage medium in any form. This is not limited.
8. A "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, and a related protocol applied to a future communication system. This is not limited in this application.
9. Arrows or blocks shown by dashed lines in diagrams of the accompanying drawings in this specification of this application indicate optional steps or optional modules.
10. Unless otherwise specified, "/" represents an "or" relationship between associated objects. For example, A/B may represent A or B. "And/or" in this application describes only an association relationship between associated objects and represents that three relationships may exist. For example, A and/or B may represent the following three cases: Only A exists, both A and B exist, and only B exists, where A and B may be singular or plural.

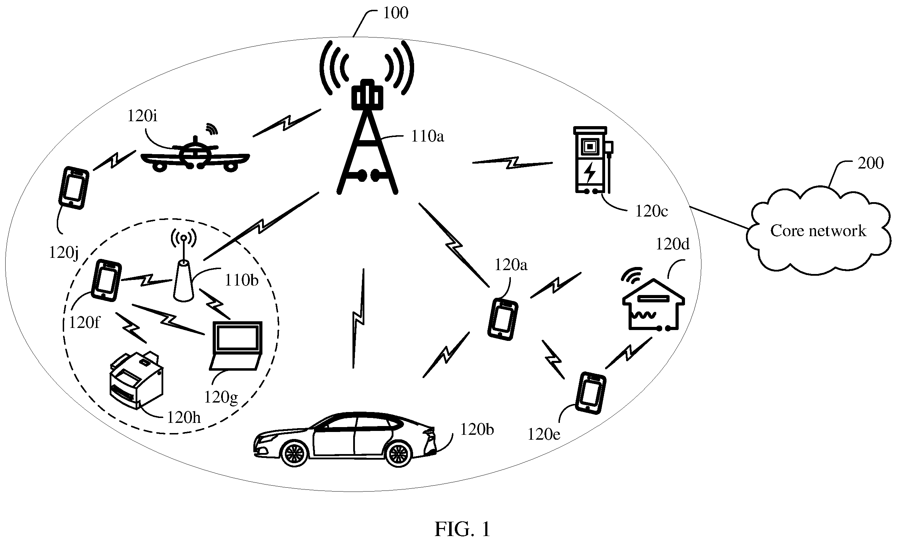

For ease of understanding, the following describes, by using a communication system shown in FIG. 1 as an example, a communication system to which embodiments of this application may be applied.

As shown in FIG. 1, the communication system includes a radio access network (radio access network, RAN) 100 and a core network (core network, CN) 200. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G system, a 5G system, a non-terrestrial communication network (non-terrestrial network, NTN) system, or a future-oriented evolved system. Alternatively, the RAN 100 may be an open access network (open RAN, O-RAN or ORAN), a cloud radio access network (cloud radio access network, CRAN), or a wireless fidelity (wireless fidelity, Wi-Fi) system, or may be a communication system integrating two or more of the foregoing systems.

A device in the communication system may send a signal to another device or receive a signal from another device. The signal may include information, signaling, data, or the like. The device may also be replaced with an entity, a network entity, a communication device, a communication module, a node, a communication node, or the like. In embodiments of this application, the device is used as an example for description.

In embodiments of this application, the terminal device 120 is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus.

In embodiments of this application, alternatively, the terminal device 120 may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), customer premises equipment (customer premises equipment, CPE), a smart point of sale (point of sale, POS) machine, a handheld device with a wireless communication function, a compute device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network that is evolved after 5G, or the like. This is not limited thereto. In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component.

In embodiments of this application, the RAN node 110 may also be referred to as an access network device, an access node, or a RAN entity, and is configured to help the terminal device implement radio access. A plurality of RAN nodes 110 may be nodes of a same type, or may be nodes of different types. In some scenarios, roles of the RAN node 110 and the terminal device 120 are relative. For example, in FIG. 1, a network element 120i may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The RAN node 110 and the terminal device 120 are sometimes referred to as communication apparatuses. For example, in FIG. 1, 110a and 110b may be understood as communication apparatuses having a base station function, and the network elements 120a to 120j may be understood as communication apparatuses having a terminal function.

In a possible scenario, the RAN node 110 may be a base station (base station), an evolved base station (evolved NodeB, eNodeB), an access point (access point, AP), a transmission reception point (transmission reception point, TRP), a next generation base station (next generation NodeB, gNB), a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, alternatively, the RAN node may be a server, a wearable device, a vehicle, a vehicle-mounted device, or the like. For example, an access network device in a V2X technology may be a roadside unit (roadside unit, RSU).

In another possible scenario, a plurality of RAN nodes collaborate to assist the terminal in implementing radio access, and different RAN nodes each implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). For the CU node and the DU node, protocol layers of a gNB are split. Functions of some protocol layers are controlled by the CU in a centralized manner, functions of some or all remaining protocol layers are distributed in the DU, and the CU controls the DU in a centralized manner. In an implementation, a radio resource control (radio Resource Control, RRC) layer, a packet data convergence protocol (packet data convergence protocol, PDCP) layer, and a service data adaptation protocol (service data adaptation protocol, SDAP) layer in a protocol stack are deployed on the CU; and a radio link control (radio link control, RLC) layer, a media access control (media access control, MAC) layer, and a physical layer (physical layer, PHY) in the protocol stack are deployed on the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In embodiments of this application, the core network device 200 is a device that is in the core network (core network, CN) and that provides service support for the terminal device 120. Currently, some examples of the core network device are an access and mobility management function (access and mobility management function, AMF) entity, a session management function (session management function, SMF) entity, and a user plane function (user plane function, UPF) entity. Core network devices are not listed one by one herein. The AMF entity may be responsible for access management and mobility management of the terminal device. The SMF entity may be responsible for session management, for example, user session establishment. The UPF entity may be a functional entity on a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be installed in the network device or used together with the network device. In embodiments of this application, only an example in which the apparatus configured to implement the function of the network device is a network device is used for description, and constitutes no limitation on the solutions in embodiments of this application.

It should be noted that a scenario in which the network device is located is not limited in embodiments of this application. In addition, the network device may be a hardware device, or may be a software function running on dedicated hardware, or a software function running on general-purpose hardware. For example, the network device is an entity including a dedicated or general-purpose hardware device and software function. A specific form of the network device is not limited in this application.

As described above, in the current technical background, when selecting a compute node for executing a compute task, a network device considers only balance of network load or a length of a communication path. Therefore, the selected compute node may not be a node with a good compute resource, and consequently a latency for executing the compute task is high.

In view of this, this application provides a communication method, apparatus, and system. A network device (referred to as an access communication and computing node below) that can provide an access service for a terminal device and that has a computing capability, or a core network, may determine, based on a performance requirement of a compute task that the terminal device requests to invoke and a wireless communication resource provided by the access communication and computing node for the compute task, whether the access communication node or a neighboring node of the access communication node can provide a compute resource for the compute task. Further, a node whose available compute resource can support the performance requirement of the compute task is selected to provide the compute resource for the compute task, so that performance of the compute task can be ensured.

For ease of understanding the technical solutions of this application, the following describes related terms in this application.
1. A communication and computing node is also referred to as a communication-computing node, and is a network device that has a computing capability and can provide a communication function.
2. A compute function is software program code that is written to support computational processing of specified data according to a specified algorithm. For example, the computational processing may include video stream transcoding, image rendering, image detection, artificial intelligence (artificial intelligence, AI) computation, and the like.
3. A compute function instance is an application program obtained by installing compute function code on a compute node and completing a function startup operation, and is briefly referred to as a function instance below.
4. Compute function instantiation may also be referred to as compute function instance instantiation, and is a process of deploying function code to a compute node, completing startup or activation of a function, and generating a function instance. It should be noted that, after the function is instantiated, the function instance may implement a computational processing function of the compute function. Compute function instantiation is briefly referred to as function instantiation or function instance deployment below.
5. A compute function invocation means using a deployed function instance to perform computational processing on specified data, and is briefly referred to as a function invocation below.
6. A compute task is also referred to as a computing task, and is a task in which an invoker of a compute function requests, using a function invocation, a service system that provides the compute function to perform specific computation to complete a specific computational processing function, for example, a task of performing a video transcoding operation on specified data to implement a video transcoding function, or a task of performing rendering computation on a specified image to implement a rendering effect. Executing one compute task includes one function invocation or a plurality of function invocations. The plurality of function invocations may be a plurality of function invocations in continuous duration; or the plurality of function invocations may be a plurality of invocations of function instances of a specific type in noncontinuous duration, for example, invocations of function instances used for image rendering, or invocations of function instances used for image detection (for example, foreign object detection).
7. A computing service is also referred to as a compute service, is a cloud computing service signed by an operator or a cloud service provider with a third-party customer, and can provide an invoker of a compute function with a resource for executing one or more compute tasks. The operator or the cloud service provider and the third-party customer may sign the computing service in a manner of functional description, for example, a cloud rendering service. Alternatively, the operator or the cloud service provider and the third-party customer may sign the computing service by specifying an online running manner of a specific compute function, for example, a quantity of compute resources required by the compute function, or a compute resource sharing mode between function instances. Alternatively, the operator or the cloud service provider and the third-party customer may further agree on service level agreement (service level agreement, SLA) requirement information of one or more specific cloud computing services during service subscription. SLA requirement information of a cloud computing service may indicate computing performance that needs to be provided by the cloud computing service. For example, the SLA requirement information may indicate a latency required for executing a compute task by a function instance. For example, if the compute task is a picture rendering task, the latency required for executing the compute task may be duration required for rendering a frame of image. Alternatively, SLA requirement information of a cloud computing service may indicate computing performance and communication performance that need to be provided by the cloud computing service. For example, the SLA requirement information may indicate a total latency from sending a compute task request by a terminal device to receiving a compute task execution result by the terminal device. For example, if the compute task is a picture rendering task, the total latency may be total duration from sending a picture rendering request by the terminal device to receiving a picture rendering result by the terminal device.

In embodiments of this application, a compute service may be identified by using a compute service identifier, and a compute task may be identified by using a compute task identifier. It should be noted that, in some implementation cases, the compute service and the compute task are not strictly distinguished, and the compute service identifier and the compute task identifier are not strictly distinguished either. For example, the compute service identifier may also be represented by the compute task identifier.

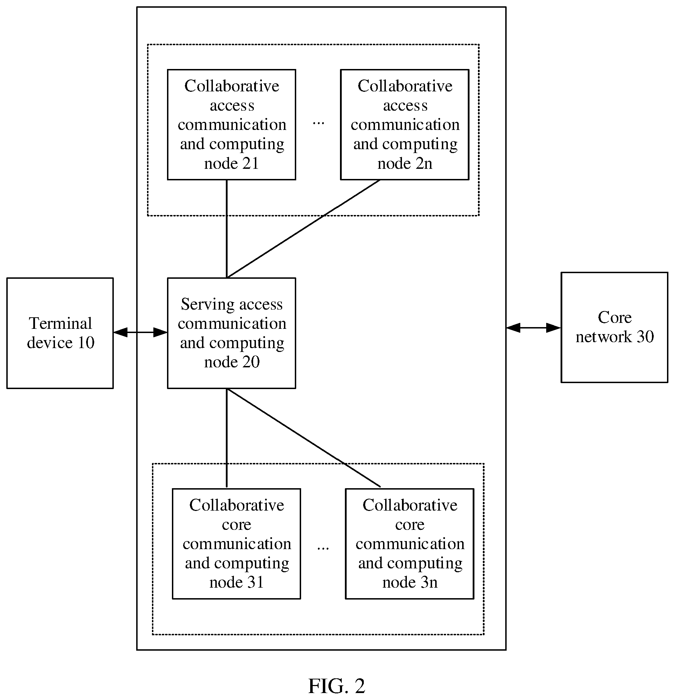

FIG. 2 is another block diagram of a communication system according to an embodiment of this application. As shown in FIG. 2, the communication system may include a terminal device 10, a serving access communication and computing node 20, and a core network 30. Optionally, the communication system may further include at least one collaborative access communication and computing node (for example, collaborative access communication and computing nodes 21 to 2n, where n is a positive integer); and the communication system may further include at least one collaborative core communication and computing node (for example, collaborative core communication and computing nodes 31 to 3n, where n is a positive integer). The terminal device 10 may include any one of the terminal devices 120 shown in FIG. 1. The serving access communication and computing node 20 may include the RAN node 110 in FIG. 1. The at least one collaborative access communication and computing node may also include the RAN node 110 in FIG. 1. The at least one collaborative core communication and computing node may include the core network 200 in FIG. 1. The core network 30 may communicate with each communication and computing node by using a control plane, and the control plane may include one or more control plane functional entities in the core network 200.

During actual implementation, in addition to a communication function, the foregoing communication and computing node (for example, the serving access communication and computing node, the collaborative access communication and computing node, or the collaborative core communication and computing node) may further have some or all of the following functions:
(1) a compute task decision-making function, that is, determining whether compute resources of the communication and computing node are sufficient for executing local compute tasks, where the local compute task may be a compute task requested by the terminal device or another communication and computing node, or may be a compute task allocated by the core network;
(2) a function instance control function, including deploying function instances to virtualized hardware platforms and/or managing virtualized resources;
(3) providing virtualized resources required for running compute functions, where the virtualized resources include communication resources and compute resources, and may further include storage resources, and more specifically, the compute resources include virtualized central processing unit (central processing unit, CPU) resources, memory resources, and the like; and
(4) providing handling of API invocations of compute functions by the terminal device 10, forwarding invocation requests of compute functions from the terminal device 10 to other communication and computing nodes (for example, communication and computing nodes that provide function instances), or forwarding data files that need to be processed by the terminal device to other communication and computing nodes (for example, communication and computing nodes that provide function instances).

Particularly, the serving access communication and computing node 20 is further configured to establish a communication connection to the terminal device 10 based on a compute task invocation request of the terminal device 10. The communication connection is used to carry a function invocation, or is used to carry compute task data.

It should be noted that a communication latency between the at least one collaborative access communication and computing node or the at least one collaborative core communication and computing node and the serving access communication and computing node 20 meets a latency requirement. For example, the communication latency between the at least one collaborative access communication and computing node or the at least one collaborative core communication and computing node and the serving access communication and computing node 20 is less than or equal to a latency threshold. The latency threshold may be 1 millisecond, 2 milliseconds, 5 milliseconds, or another value.

It should be further noted that a function of each of the foregoing communication and computing nodes may be implemented or completed by one logical network element or a group of co-deployed logical network elements. For example, the serving access communication and computing node or the collaborative access communication and computing node may include a conventional base station and a group of edge computing servers. In embodiments of this application, functional division between the conventional base station and the edge computing server is not specifically limited.

The core network 30 is configured to perform one or more of the following operations: processing a compute task invocation request of the terminal device 10 to implement identity authentication and authorization; deploying overall management and control policies on each communication and computing node for a compute task; and determining a collaborative communication and computing node based on the compute task, for example, selecting one or more of the at least one collaborative access communication and computing node and/or the at least one collaborative core communication and computing node as the collaborative communication and computing node.

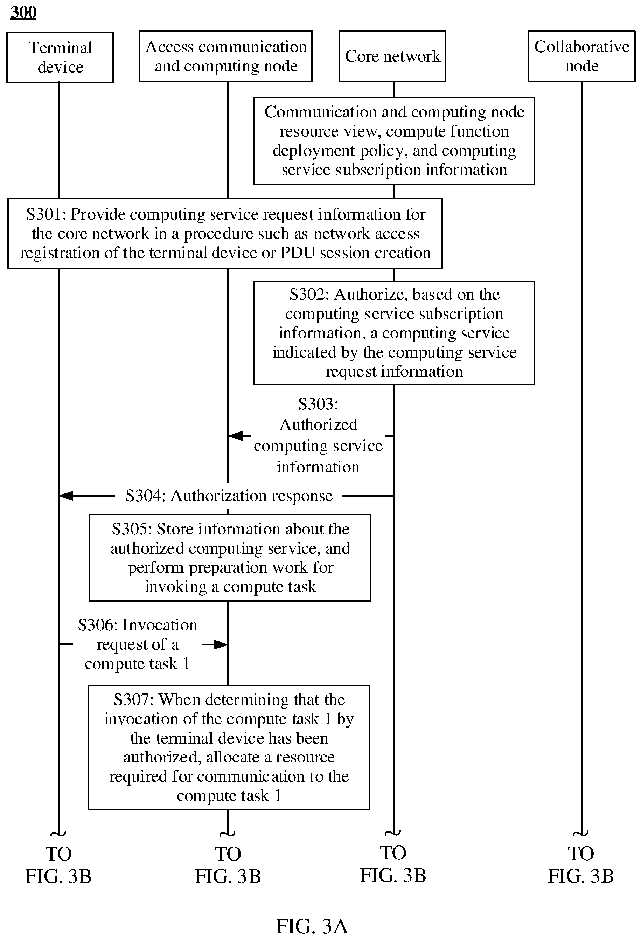

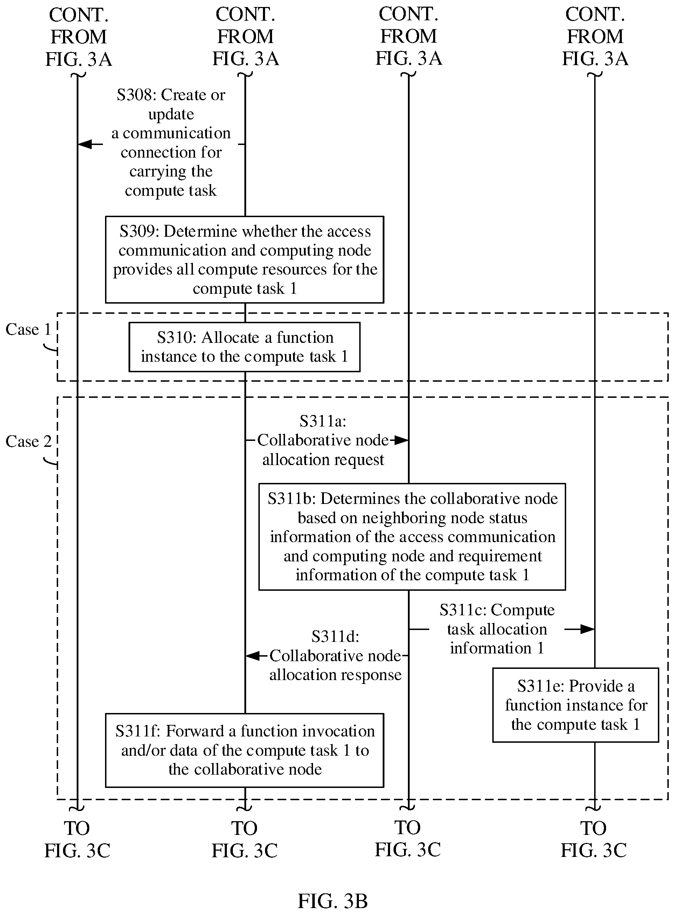

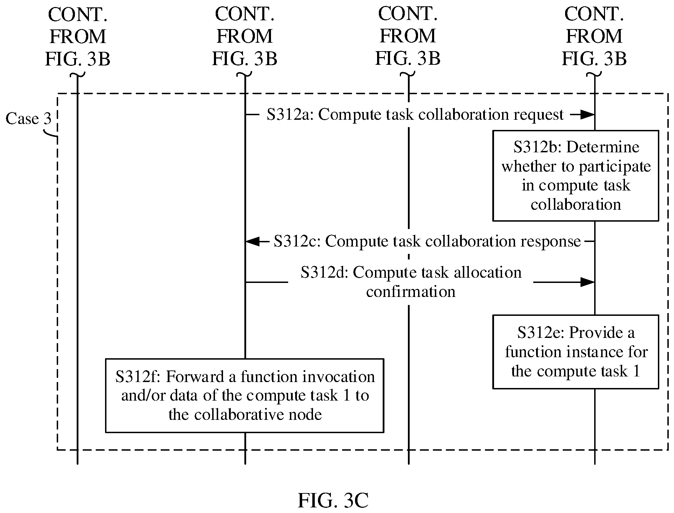

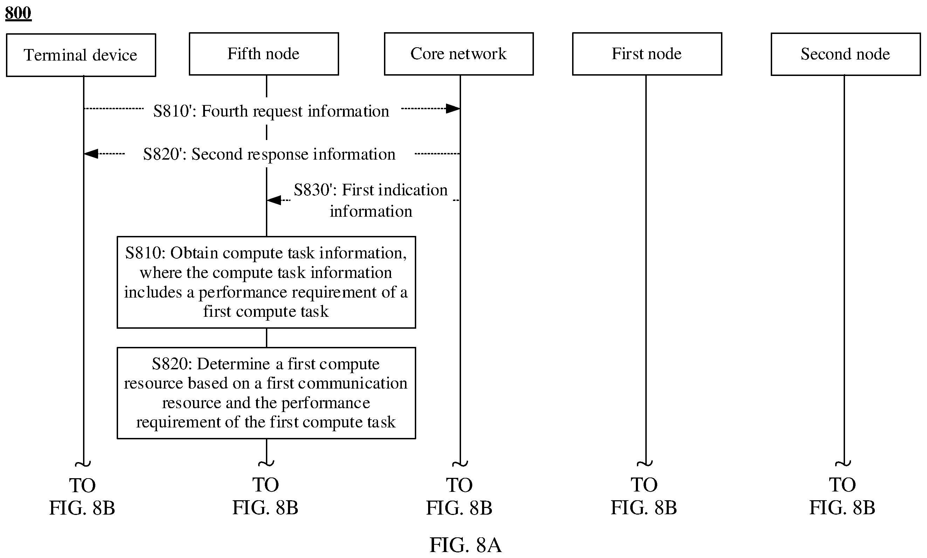

The following describes, with reference to FIG. 3A to FIG. 8B, a communication method performed based on the communication system shown in FIG. 2.

FIG. 3A to FIG. 3C are a schematic flowchart of a communication method according to an embodiment of this application. The method 300 shown in FIG. 3A to FIG. 3C may be performed by a terminal device, an access communication and computing node, and a core network. In some scenarios, the method 300 further requires participation of a collaborative node. The terminal device may include the terminal device 10 in FIG. 2, the access communication and computing node may include the serving access communication and computing node 20 in FIG. 2, the core network may include the core network 30 in FIG. 2, and the collaborative node may include the at least one collaborative access communication and computing node and/or the at least one collaborative core communication and computing node in FIG. 2. The method 300 may include some or all of the following steps.

It should be noted that the core network may pre-configure or pre-store communication and computing node resource information, a compute function deployment policy, and computing service subscription information. The communication and computing node resource information may indicate a connection relationship and/or a communication relationship between communication and computing nodes (including the access communication and computing node and the collaborative node) in a network, and a compute resource of each communication and computing node. The compute function deployment information indicates information such as communication and computing nodes on which function instances need to be deployed for a compute task, types and/or a quantity of the function instances that need to be deployed, and a compute resource that needs to be reserved for each function instance. The compute function deployment information includes a function deployment policy and/or a function deployment status. The function deployment policy indicates deployment manners of some undeployed function instances. To be specific, for the undeployed function instances, each communication and computing node may deploy the function instance according to the function deployment policy. The function deployment status indicates a function instance that has been deployed on each communication and computing node. The computing service subscription information indicates information about a computing service that has been subscribed to in (or can be provided by) the current network.

S301: Include computing service request information in a procedure such as network access registration of the terminal device or protocol data unit (protocol data unit, PDU) session creation.

The computing service request information indicates one or more computing services that the terminal device expects the communication and computing node to provide. The computing service request information may include a computing service identifier or a compute task identifier associated with the computing service, or may include a compute function identifier mapped to the computing service.

It should be understood that one computing service may be associated with one or more compute tasks. "Be associated with" may be understood as follows: When the communication and computing node can provide the computing service, the terminal device may request the communication and computing node to execute the one or more compute tasks.

For example, a third party/user and an operator sign a computing service for picture rendering by using an algorithm. The terminal device may request to activate the computing service in S301. Then, the communication and computing node may complete, based on an API invocation request of the terminal device for a compute function associated with the computing service, a compute task of performing one or more times of picture rendering using a picture rendering algorithm.

It should be noted that in some implementation cases, the computing service identifier and the compute task identifier are not strictly distinguished. For example, the computing service identifier may also be represented by the compute task identifier.

S302: The core network authorizes, based on the computing service subscription information, the computing service indicated by the computing service request information.

For example, when it is determined based on the computing service subscription information that a computing service indicated by the computing service request information is not subscribed to, the computing service is not authorized; or if a computing service indicated by the computing service request information is subscribed to, the computing service is authorized.

Authorizing a computing service may be understood as follows: The communication and computing node (for example, the access communication and computing node and/or the collaborative node) subsequently provides a compute resource and/or a communication resource for one or more compute tasks associated with the computing service.

In some implementations, the core network may obtain SLA requirement information of the authorized computing service, and/or feature information of a compute task associated with the authorized computing service. The feature information indicates information such as computational complexity and a computational amount of the compute task.

S303: The core network sends authorized computing service information to the access communication and computing node.

The authorized computing service information indicates the authorized computing service. For example, the authorized computing service information may include an identifier of the authorized computing service and/or an identifier of the compute task associated with the authorized computing service. Alternatively, the authorized computing service information may further include one or more of priority information of the compute task associated with the authorized computing service, the SLA requirement information of the authorized computing service, or the feature information of the compute task associated with the authorized computing service.

S304: The core network sends an authorization response to the terminal device.

The authorization response sent to the terminal may include the authorized computing service information. Alternatively, the authorization response may further include function invocation information allocated to the terminal device for the authorized computing service. The function invocation information may include a target address used by the terminal device to remotely invoke a compute function corresponding to the compute task, for example, may be an IP address and/or a port number of the access communication and computing node. The function invocation information may indicate information about one or more invocation addresses. Each authorized computing service may correspond to one invocation address, or all compute tasks may correspond to one invocation address. A function invocation is used to request to invoke one or more function instances to complete the compute task. The function invocation information may further include other identification information used by the communication and computing node to identify the compute task, for example, a function name of a compute function required for executing the compute task, an API name or a universal identifier of the compute function required for executing the compute task, and a temporary identifier allocated to a compute task that is being executed.

It should be noted that a specific implementation of the function invocation in this application may be an explicit API invocation, for example, a remote procedure call (remote procedure call, RPC) or a hypertext transfer protocol (hypertext transfer protocol, HTTP) RESTful invocation (REST refers to representational state transfer). Alternatively, a specific implementation of the function invocation in this application may be an implicit triggering manner of triggering the function to run after instantiation. For example, data such as a video or a picture is sent to a data storage unit associated with the compute function to trigger the function to run after instantiation, or another function triggering event may be sent.

During actual implementation, the authorized computing service information may be carried by an N2 message or another control plane protocol message for communication between the core network and the access communication and computing node, and the authorization response may be carried by a non-access stratum (non-access stratum, NAS) message or another communication protocol message used between the core network and the terminal device.

It should be noted that the authorized computing service information sent to the access communication and computing node and the authorization response sent to the terminal may also be combined for execution. To be specific, the core network sends the authorized computing service information and the authorization response to the access communication and computing node by using one message. Further, the access communication and computing node forwards the authorization response to the terminal device. In other words, S304 and S305 may be performed synchronously, or S305 may be performed before S304.

S305: The access communication and computing node stores information about the authorized computing service, and performs preparation work for executing the compute task.

For example, the information about the authorized computing service is obtained based on the authorized computing service information and stored.

For example, the preparation work for executing the compute task may include at least one of the following:
(1) if the access communication and computing node does not locally have an instantiated function instance required by a compute task associated with the computing service, triggering, by the access communication and computing node, a function required by the compute task to be instantiated, to complete startup or activation of a function instance;
(2) downloading or obtaining, in advance, code of the compute function required by the compute task; or
(3) obtaining and storing feature information of the compute task and/or a performance requirement of the compute task.

In some implementations, the performance requirement of the compute task may include a requirement of the compute task on performance such as quality of service. For example, the performance requirement of the compute task includes information about quality of service (quality of service, QoS) expected by the compute task. Specifically, the performance requirement of the compute task may be a computation latency required by the compute task, or may be a total latency (including a communication latency and a computation latency) required from sending a compute task request by the terminal device to receiving a compute task execution result.

During actual implementation, the SLA requirement information of the authorized computing service may include the performance requirement of the compute task.

S306: The terminal device sends an invocation request of a compute task 1 to the access communication and computing node.

For example, when or after receiving the authorization response, the terminal device sends the invocation request of the compute task 1 to the access communication and computing node. For example, the invocation request may carry an identifier and/or function invocation information of the compute task 1, so that the access communication and computing node identifies the compute task requested by the terminal device.

S307: When determining that the invocation of the compute task 1 by the terminal device has been authorized, the access communication and computing node allocates a resource required for communication to the compute task 1.

The invocation of the compute task 1 may be understood as follows: The access communication and computing node is requested to execute the compute task 1, or the access communication and computing node is requested to provide a compute resource and a communication resource that are required for executing the compute task 1.

For example, the access communication and computing node determines, based on the authorized computing service information, that the invocation of the compute task 1 by the terminal device has been authorized. Further, the access communication and computing node allocates the communication resource for the current invocation of the compute task 1. The resource required for communication may include a communication bearer resource required for information and/or data transmission associated with the current compute task 1. For example, the communication bearer resource may include, but is not limited to, QoS that can be satisfied by a communication connection, a transmission rate/bandwidth of information and/or data, or a latency bound of information and/or data transmission.

The resource required for communication may further include the function invocation information allocated to the compute task 1, for example, a destination address (for example, the IP address and/or the port number of the access communication and computing node) of information and/or data associated with the compute task 1.

The information associated with the compute task 1 may include information required for executing the compute task 1, for example, a function invocation. The data associated with the compute task 1 may include data that needs to be processed by using the compute task 1. For example, if the compute task 1 is video stream decoding, the data associated with the compute task 1 may be to-be-decoded video stream data.

In some implementations, S307 may be performed before S306. For example, information about the resource required for communication may be delivered to the terminal device in S305. In the foregoing scenario, S308 may be skipped, and S309 may be directly performed.

S308: The access communication and computing node creates or updates, for the terminal device, a communication connection that carries the compute task 1.

For example, the access communication and computing node creates or updates, based on the resource required for communication, the communication connection that carries the compute task 1, for example, creates or updates a channel used to transmit information and/or data of the compute task 1.

S309: The access communication and computing node determines whether the access communication and computing node provides all compute resources for the compute task 1.

In some implementations, the access communication and computing node determines, based on a communication capability (for example, a communication resource that can be provided for the compute task 1) of the access communication and computing node and at least one of a performance requirement of the compute task 1 and feature information of the compute task 1, a compute resource 1 required by the compute task 1. For example, the performance requirement of the compute task 1 and/or the feature information of the compute task 1 may be obtained by the access communication and computing node from the authorized computing service information in S303; or the performance requirement of the compute task 1 and/or the feature information of the compute task 1 may be obtained in advance and stored in the access communication and computing node (for example, before the terminal device accesses, the access communication and computing node actively downloads/is passively configured with information related to potential compute tasks in advance).

Further, the access communication and computing node determines, based on an available compute resource of the access communication and computing node and the compute resource 1, whether to provide all the compute resources for the compute task 1.

For example, if the available compute resource of the access communication and computing node cannot meet the compute resource 1 required by the compute task 1, the access communication and computing node may determine not to provide all the compute resources for the compute task 1; or if the available compute resource of the access communication and computing node can meet the compute resource 1 required by the compute task 1, the access communication and computing node may determine to provide all the compute resources for the compute task 1.

In some implementations, S309 may be performed before S308, or S308 and S309 may be performed synchronously.

**Based on a decision result of the access communication and computing node, subsequent steps may be classified into the following three cases: If the access communication and computing node determines to provide all the compute resources for the compute task 1 in S309, S310 is performed (that is, a case 1).**

S310: The access communication and computing node allocates a function instance to the compute task 1.

For example, the access communication and computing node may select, from at least one instantiated function instance, one or more function instances as candidate function instances; or the access communication and computing node may trigger deployment of one or more function instances, and use the newly deployed function instance as a candidate function instance of the compute task 1. Further, when the access communication and computing node actually executes the compute task 1, one or more function instances may be selected from the candidate function instance to execute the compute task 1, so that the access communication and computing node invokes, by using the one or more selected function instances, some or all compute resources required by the compute task 1.

**If the access communication and computing node determines not to provide all the compute resources for the compute task 1 in S309, subsequent steps may be classified into a case 2 and a case 3. The following separately provides descriptions:**

### Case 2 (including S311a to S311f):

S311a: The access communication and computing node sends a collaborative node allocation request to the core network.

For example, the collaborative node allocation request may indicate a compute resource required by the compute task 1. For example, the collaborative node allocation request may include at least one of the following information: an air interface resource that can be allocated by the access communication and computing node to the compute task 1, the identifier of the compute task 1, the feature information of the compute task 1, the performance requirement of the compute task 1, and the compute resource 1 required by the compute task 1. The air interface resource indicates communication performance (for example, a communication latency) that can be met by communication between the terminal device and the access communication and computing node.

It should be noted that, the compute resource that is required by the compute task 1 and that is indicated by the collaborative node allocation request may be the compute resource 1, or may be a remaining compute resource (referred to as a compute resource 2 below), in the compute resource 1, other than a compute resource that can be provided by the access communication and computing node for the compute task 1. For example, if the access communication and computing node does not provide any compute resource for the compute task 1, the compute resource that is required by the compute task 1 and that is indicated by the collaborative node allocation request may be the compute resource 1; or if the access communication and computing node provides a part of compute resources for the compute task 1, the compute resource that is required by the compute task 1 and that is indicated by the collaborative node allocation request may be the compute resource 2.

In some implementations, the core network may directly or indirectly obtain the compute resource required by the compute task 1. For example, the core network may directly obtain the compute resource required by the compute task 1 from the collaborative node allocation request; or the core network may determine, based on information carried in the collaborative node allocation request, the compute resource required by the compute task 1, for example, determine, based on the air interface resource that can be allocated by the access communication and computing node to the compute task 1 and at least one of the feature information of the compute task 1 and the performance requirement of the compute task 1, the compute resource required by the compute task 1.

S311b: The core network determines a collaborative node based on neighboring node status information of the access communication and computing node and the compute resource required by the compute task 1.

A neighboring node of the access communication and computing node may include a communication and computing node directly connected to the access communication and computing node, and the neighboring node of the access communication and computing node may be connected to the access communication and computing node through a virtual private line interface. Alternatively, the neighboring node of the access communication and computing node may be a communication and computing node whose communication latency with the access communication and computing node is less than or equal to a latency threshold, where the latency threshold may be 1 millisecond, 5 milliseconds, or another value. The neighboring node of the access communication and computing node includes at least one access communication and computing node and/or at least one core communication and computing node.

For example, the core network may determine, based on information about the access communication and computing node and the neighboring node of the access communication and computing node, a collaborative node (a collaborative core communication and computing node and/or a collaborative access communication and computing node) that executes the compute task for the access communication and computing node. For example, the core network may determine, based on a function deployment policy and/or a function deployment status, status information (for example, information about an available compute resource) of the neighboring node of the access communication and computing node.

Further, the core network selects, from the neighboring node of the access communication and computing node based on the status information of the neighboring node of the access communication and computing node and the compute resource required by the compute task 1, one or more nodes as collaborative nodes. An available compute resource of each of the one or more nodes may meet the compute resource that is required by the compute task 1 and that is indicated by the collaborative node allocation request, or a sum of available compute resources of the one or more nodes may meet the compute resource that is required by the compute task 1 and that is indicated by the collaborative node allocation request. In other words, the core network may select one or more collaborative nodes.

In some implementations, an available compute resource of each of a plurality of neighboring nodes of the access communication and computing node can meet the compute resource that is required by the compute task 1 and that is indicated by the collaborative node allocation request. In this case, the core network may determine one of the plurality of nodes as the collaborative node based on a communication latency between the collaborative node and the access communication and computing node. For example, the core network determines a node having a lowest communication latency with the access communication and computing node among the plurality of nodes as the collaborative node.

S311c: The core network sends compute task allocation information 1 to the collaborative node.

For example, the collaborative node includes the one or more collaborative nodes. The compute task allocation information 1 may further indicate a compute resource that the collaborative node needs to provide for the compute task 1.

S311d: The core network sends a collaborative node allocation response to the access communication and computing node.

For example, the collaborative node allocation response indicates an allocation result of the collaborative node. For example, the collaborative node allocation response may carry at least one of an identifier, an IP address, and a port number of the collaborative node allocated to the compute task 1; or the collaborative node allocation response may further include information about a compute resource that can be provided by the collaborative node for the compute task 1. For example, when the core network determines a plurality of collaborative nodes for the compute task 1, the collaborative node allocation response may carry an identifier of each collaborative node and information about a compute resource that can be provided by each collaborative node for the compute task.

In some implementations, S311c and S311d may be performed synchronously, or S311c may be performed after S311d.

S311e: The collaborative node provides a function instance for the compute task 1.

For example, the collaborative node may select, from an instantiated function instance, one or more function instances as candidate function instances serving a function invocation request of the terminal device; or the collaborative node may trigger deployment of one or more function instances, and use the newly deployed function instance as a function instance that is potentially allocated to the compute task 1.

It should be noted that this step is mainly to reserve the function instance for the compute task 1. If there are a plurality of function instances, which function instance is used to execute the compute task 1 may not be specifically specified. Instead, after S311f, when an actual function invocation arrives, one of the plurality of function instances is selected to execute the compute task 1.

S311f: The access communication and computing node forwards the function invocation and/or the data of the compute task 1 to the collaborative node.

For some compute tasks, data that needs to be processed by the compute tasks needs to be sent by the terminal device to the communication and computing node, and then the communication and computing node processes the data. For the foregoing case, when receiving the to-be-processed data of the compute task, the access communication and computing node forwards the to-be-processed data to the collaborative node, so that the collaborative node executes the compute task 1.

In some implementations, the access communication and computing node forwards all or a part of function invocations and/or data of the compute task 1 to the collaborative node. For example, if the access communication and computing node does not provide any compute resource for the compute task 1, the access communication and computing node forwards all the function invocations and/or data of the compute task 1 to the collaborative node; or if the access communication and computing node provides a part of compute resources for the compute task 1, the access communication and computing node forwards a remaining part of function invocations and/or data of the compute task 1 to the collaborative node. The remaining part refers to function invocations and/or data other than those corresponding to the compute resource that can be provided by the access communication and computing node for the compute task 1.

In some implementations, all the function invocations of the compute task 1 are included in the invocation request of the compute task 1; or a part of function invocations of the compute task 1 are included in the invocation request of the compute task, and the remaining part of function invocations of the compute task 1 are sent by the terminal device to the access communication and computing node after the terminal device sends the invocation request of the compute task 1.

### Case 3 (including S312a to S312f):

S312a: The access communication and computing node sends a compute task collaboration request to the collaborative node.

For example, the access communication and computing node may use one or more of neighboring nodes of the access communication and computing node as collaborative nodes. In some implementations, the access communication and computing node may broadcast the compute task collaboration request to the neighboring node of the access communication and computing node. In an example, the access communication and computing node broadcasts or multicasts the compute task collaboration request to all neighboring nodes, that is, uses all the neighboring nodes as collaborative nodes. In another example, the access communication and computing node broadcasts or multicasts the compute task collaboration request to a neighboring node that meets a communication latency requirement, that is, uses the neighboring node that meets the communication latency requirement as a collaborative node. The communication latency requirement may include: a communication latency between the neighboring node and the access communication and computing node is less than or equal to a specific threshold, where the specific threshold may be 2 milliseconds, 3 milliseconds, or another value.

In some implementations, the access communication and computing node may send, based on communication latencies with the neighboring nodes, the compute task collaboration request to a neighboring node having a lowest communication latency with the access communication and computing node, that is, uses the neighboring node having the lowest communication latency with the access communication and computing node as a collaborative node. Further, if the neighboring node having the lowest communication latency with the access communication and computing node cannot provide a compute resource for the compute task 1, the access communication and computing node sends the compute task collaboration request to a neighboring node having a second lowest communication latency with the access communication and computing node. The rest may be deduced by analogy.

For example, the compute task collaboration request may indicate a compute resource required by the compute task 1. For example, the compute task collaboration request may include at least one of the following information: an air interface resource that can be allocated by the access communication and computing node to the compute task 1, the identifier of the compute task 1, the feature information of the compute task 1, the performance requirement of the compute task 1, and the compute resource 1 required by the compute task 1. The air interface resource indicates communication performance between the terminal device and the access communication and computing node.

The compute resource required by the compute task 1 may be the compute resource 1, may be the compute resource 2, or may be a compute resource 3. The compute resource 3 may be a part of the compute resource 1 or a part of the compute resource 2.

S312b: The collaborative node determines whether to participate in compute task collaboration.

For example, the collaborative node determines, based on an available compute resource of the collaborative node and the compute resource required by the compute task 1, whether to participate in compute task collaboration. If the collaborative node cannot support, based on the available compute resource of the collaborative node, the compute resource required by the compute task 1, the collaborative node may determine not to participate in compute task collaboration; or if the collaborative node can support, based on the available compute resource of the collaborative node, the compute resource required by the compute task 1, the collaborative node may determine to participate in compute task collaboration.

S312c: The collaborative node sends a compute task collaboration response to the access communication and computing node.

For example, the compute task collaboration response may indicate whether the collaborative node participates in compute task collaboration.

S312d: The access communication and computing node sends a compute task allocation confirmation to the collaborative node.

For example, the access communication and computing node sends the compute task allocation confirmation to a collaborative node that determines to participate in compute task collaboration.

S312e: The collaborative node provides a function instance for the compute task 1.

S312f: The access communication and computing node forwards the function invocation and/or the data of the compute task 1 to the collaborative node.

For specific implementations of S312e and S312f, refer to descriptions in S311e and S311f. Details are not described herein again.

It may be understood that the case 1 and the case 2 may occur simultaneously, that is, S310 and S311a to S311f may be performed synchronously; or the case 1 and the case 3 may occur simultaneously, that is, S310 and S312a to S312f may be performed synchronously. In other words, the access communication and computing node and at least one collaborative node may simultaneously provide compute resources for the compute task 1. For example, if the compute task 1 includes a plurality of subtasks, the access communication and computing node may provide compute resources for a part of the plurality of subtasks, and the at least one collaborative node provides compute resources for the remaining part of the plurality of subtasks.

In the communication method provided in this embodiment of this application, the core network may deploy, in the access communication and computing node in advance based on the computing service information of the terminal device, related information of the compute task associated with the subscribed computing service indicated by the computing service information, for example, the feature information of the compute task and the SLA requirement information of the computing service. In this way, when receiving the invocation request of the compute task from the terminal device, the access communication and computing node may determine, in a timely manner, whether to provide all the compute resources for the compute task.

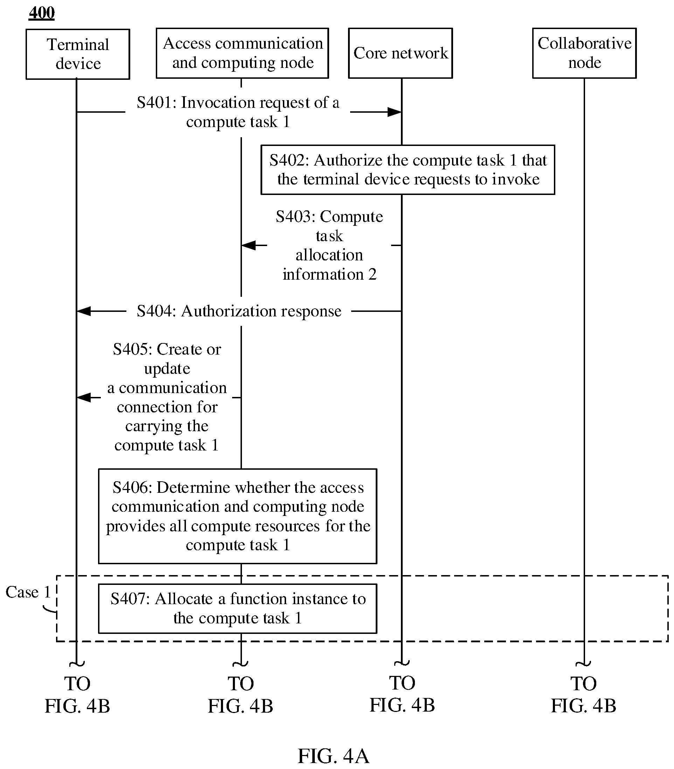

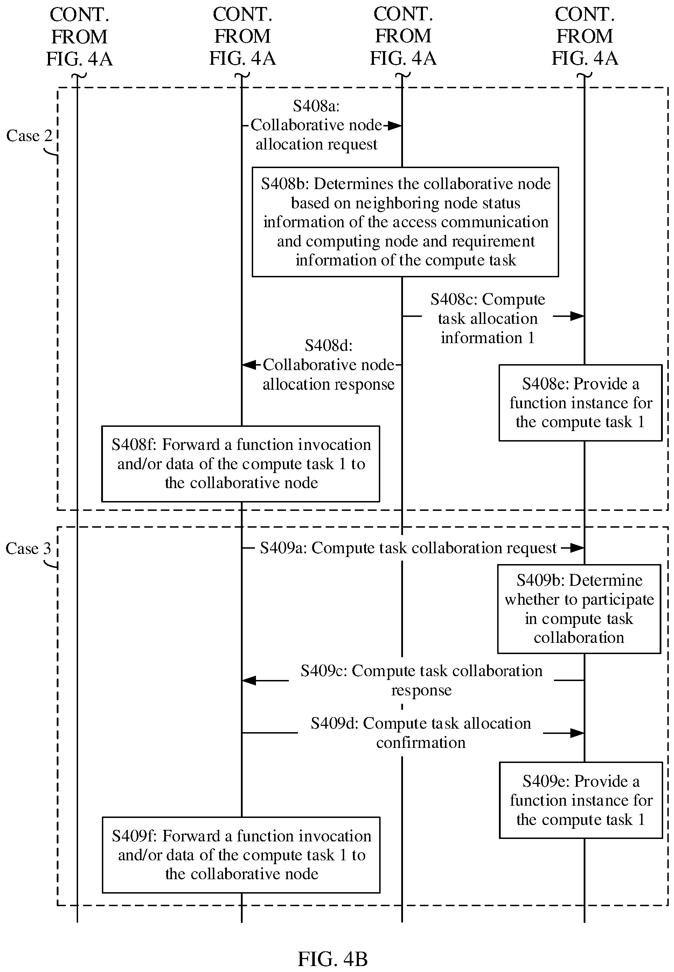

FIG. 4A and FIG. 4B are another schematic flowchart of a communication method according to an embodiment of this application. The method 400 shown in FIG. 4A and FIG. 4B may be performed by a terminal device, an access communication and computing node, and a core network. In some scenarios, the method 400 further requires participation of a collaborative node. The terminal device may include the terminal device 10 in FIG. 2, the access communication and computing node may include the serving access communication and computing node 20 in FIG. 2, the core network may include the core network 30 in FIG. 2, and the collaborative node may include the at least one collaborative access communication and computing node and/or the at least one collaborative core communication and computing node in FIG. 2. The core network may pre-configure or pre-store communication and computing node resource information, compute function deployment information, and computing service subscription information. The method 400 may include some or all of the following steps.

S401: The terminal device sends an invocation request of a compute task 1 to the core network.

For example, the invocation request may carry an identifier of the compute task 1.

It should be noted that, before S401 is performed, the terminal device has accessed the access communication and computing node. Further, the terminal device sends the invocation request of the compute task 1 to the core network through the access communication and computing node, that is, the access communication and computing node transparently transmits the invocation request of the compute task 1 to the core network.

S402: The core network authorizes the compute task 1 that the terminal device requests to invoke.

If the core network determines, based on the computing service subscription information, that the compute task 1 is included in a subscribed computing service, the core network authorizes the invocation of the compute task 1 by the terminal device.

In some implementations, the core network may further obtain a performance requirement of the compute task 1 and/or feature information of the compute task 1. The feature information indicates information such as computational complexity and a computational amount of the compute task 1.

S403: The core network sends compute task allocation information 2 to the access communication and computing node.

For example, the compute task allocation information 2 may include the identifier of the compute task 1. Alternatively, the compute task allocation information 2 may further include the performance requirement of the compute task 1 and/or the feature information of the compute task 1.

S404: The core network sends an authorization response to the terminal device.

For example, the authorization response may include function invocation information allocated to the compute task 1, for example, a destination address (for example, an IP address and/or a port number of the access communication and computing node) of information and/or data associated with the compute task 1.

During actual implementation, the compute task allocation notification may be carried by an N2 message or another control plane protocol message for communication between the core network and the access communication and computing node, and the authorization response may be carried by a NAS message or another communication protocol message used between the core network and the terminal device.

It should be noted that the compute task allocation notification sent to the access communication and computing node and the authorization response sent to the terminal may also be combined for execution. To be specific, the core network sends the compute task allocation notification and the authorization response to the access communication and computing node by using one message. Further, the access communication and computing node forwards the authorization response to the terminal device. In other words, S403 and S404 may be performed synchronously, or S404 may be performed before S403.

S405: The access communication and computing node creates or updates, for the terminal device, a communication connection that carries the compute task.

For example, the access communication and computing node creates or updates the communication connection that carries the compute task 1, for example, creates or updates a channel used to transmit information and/or data of the compute task 1.

S406: The access communication and computing node determines whether to provide all compute resources for the compute task 1.

For a specific implementation in which the access communication and computing node determines whether to provide all the compute resources for the compute task 1, refer to the descriptions in S309. Details are not described herein again.

For example, S405 and S406 may be performed synchronously or in combination, or may be performed in another sequence. For example, S406 is performed before S405.

Based on a decision result of the access communication and computing node, subsequent steps may be classified into the following three cases: If the access communication and computing node determines to provide all the compute resources for the compute task 1 in S406, S407 (that is, a case 1) is performed. If the access communication and computing node determines not to provide all the compute resources for the compute task 1 in S406, subsequent steps may be classified into a case 2 (including S408a to S408f) and a case 3 (including S409a to S409f).

For specific implementations of the case 1 to the case 3, refer to the descriptions of the case 1 to the case 3 in the method 300. Details are not described herein again.

In the communication method provided in this embodiment of this application, the core network may authorize, based on the compute task invocation request of the terminal device, a single compute task invocation requested by the terminal device, and notify the access communication and computing node, so that the access communication and computing node provides communication resource and compute resource support for execution of the single compute task. It should be noted that, in this application, that a communication and computing node provides compute resource support for a compute task includes: The communication and computing node provides a compute resource for the compute task, or the communication and computing node forwards a function invocation and/or data of the compute task to a communication and computing node that can provide a compute resource for the compute task.

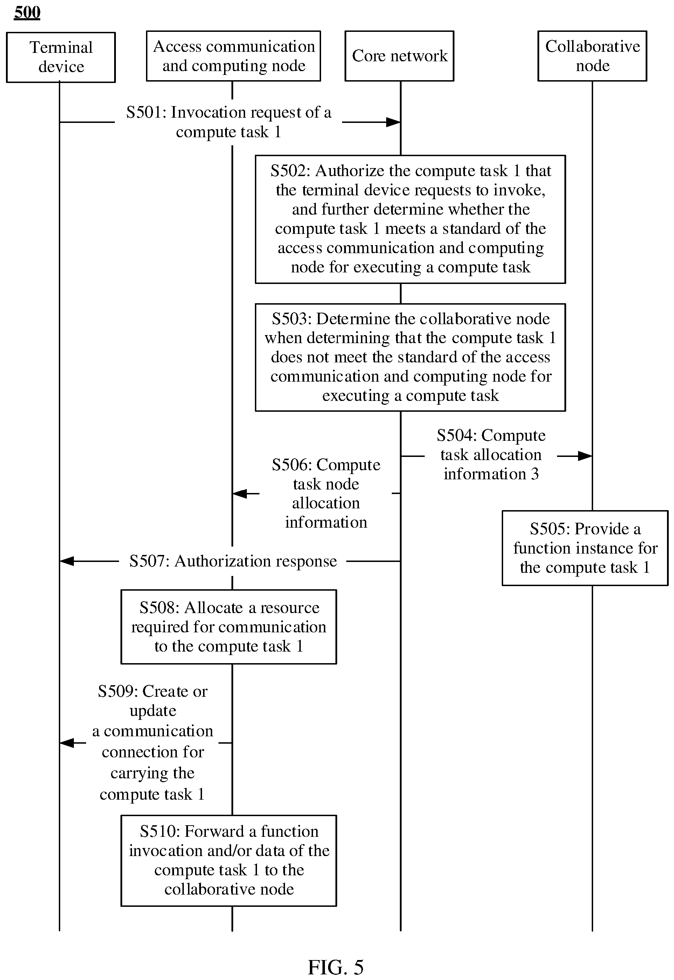

FIG. 5 is still another schematic flowchart of a communication method according to an embodiment of this application. The method 500 shown in FIG. 5 may be performed by a terminal device, an access communication and computing node, and a core network. In some scenarios, the method 500 further requires participation of a collaborative node. The terminal device may include the terminal device 10 in FIG. 2, the access communication and computing node may include the serving access communication and computing node 20 in FIG. 2, the core network may include the core network 30 in FIG. 2, and the collaborative node may include the at least one collaborative access communication and computing node and/or the at least one collaborative core communication and computing node in FIG. 2. The core network may pre-configure or pre-store communication and computing node resource information, compute function deployment information, and computing service subscription information. The method 500 may include some or all of the following steps.

S501: The terminal device sends an invocation request of a compute task 1 to the core network.

For example, the invocation request may carry an identifier of the compute task 1.

It should be noted that, before S501 is performed, the terminal device has accessed the access communication and computing node. Further, the terminal device sends the invocation request of the compute task 1 to the core network through the access communication and computing node, that is, the access communication and computing node transparently transmits the invocation request of the compute task 1 to the core network.

S502: The core network authorizes the compute task 1 that the terminal device requests to invoke, and further determines whether the compute task 1 meets a standard of the access communication and computing node for executing a compute task.

If the core network determines, based on the computing service subscription information, that the compute task 1 is included in a subscribed computing service, the core network authorizes the invocation of the compute task 1 by the terminal device.

In some implementations, the core network may further obtain a performance requirement of the compute task 1 and/or feature information of the compute task 1. The feature information indicates information such as computational complexity and a computational amount of the compute task 1. Further, the core network determines, based on the performance requirement of the compute task 1 and/or the feature information of the compute task 1, whether the compute task 1 meets the standard of the access communication and computing node for executing a compute task.

For example, if the computational complexity of the compute task 1 is high, or the required computational amount is high, and the performance requirement of the compute task 1 indicated by the computing service subscription information is low, or the priority is low, it may be determined that the compute task 1 does not meet the standard of the access communication and computing node for executing a compute task.

Further, when it is determined that the compute task 1 meets the standard of the access communication and computing node for executing a compute task, the compute task 1 may be executed according to S403 to S406 in the method 400 and one or more of the case 1 to the case 3 in the method 400. When it is determined that the compute task 1 does not meet the standard of the access communication and computing node for executing a compute task, S503 to S510 may continue to be performed.

S503: Determine a collaborative node when determining that the compute task 1 does not meet the standard of the access communication and computing node for executing a compute task.

For example, a compute resource required by the compute task 1 may be determined based on the performance requirement of the compute task 1 and/or the feature information of the compute task 1, and further one or more nodes are selected from neighboring nodes of the access communication and computing node as collaborative nodes based on the communication and computing node resource information and the compute resource required by the compute task 1.

For a specific implementation of selecting the one or more nodes from the neighboring nodes of the access communication and computing node as the collaborative nodes, refer to the descriptions in S311b. Details are not described herein again.

S504: The core network sends compute task allocation information 3 to the collaborative node.

For example, the compute task allocation information 3 may indicate the compute resource required by the compute task 1. For example, the compute task allocation information 3 includes information about the compute resource required by the compute task 1. For another example, the compute task allocation information 3 may include the identifier of the compute task 1 and at least one of the performance requirement of the compute task 1 and the feature information of the compute task 1.

S505: The collaborative node provides a function instance for the compute task 1.

For a specific implementation in which the collaborative node provides the function instance for the compute task 1, refer to the descriptions in S311e. Details are not described herein again.

S506: The core network sends compute task node allocation information to the access communication and computing node.

For example, the compute task node allocation information may indicate the collaborative node allocated to the compute task 1. The compute task node allocation information may carry at least one of an identifier, an IP address, and a port number of the collaborative node allocated to the compute task 1. The compute task node allocation information may further include information about a compute resource that can be provided by the collaborative node for the compute task 1.

S507: The core network sends an authorization response to the terminal device.

For content of the authorization response, refer to the descriptions in the method 300 and the method 400. Details are not described herein again.

During actual implementation, the compute task node allocation information may be carried by an N2 message or another control plane protocol message for communication between the core network and the access communication and computing node, and the authorization response may be carried by a NAS message or another communication protocol message used between the core network and the terminal device.

It should be noted that the compute task node allocation information sent to the access communication and computing node and the authorization response sent to the terminal may also be combined for execution. To be specific, the core network sends the compute task node allocation information and the authorization response to the access communication and computing node by using one message. Further, the access communication and computing node forwards the authorization response to the terminal device. In other words, S506 and S507 may be performed synchronously, or S507 may be performed before S506.

It should be further noted that S506 and S507 may be performed before S504, or S506 and S507 may be performed synchronously with S504.

S508: The access communication and computing node allocates a resource required for communication to the compute task 1.

The resource required for communication may include a communication bearer resource corresponding to the compute task 1, and the communication bearer resource is used to carry information and/or data transmission associated with the compute task 1. The resource required for communication may further include function invocation information allocated to the compute task 1, for example, a destination address (for example, an IP address and/or a port number of the access communication and computing node) of information and/or data associated with the compute task 1.

S509: The access communication and computing node creates or updates a communication connection that carries the compute task 1.

For a specific implementation of creating or updating the communication connection, refer to the descriptions in S405. Details are not described herein again.

S510: The access communication and computing node forwards a function invocation and/or the data of the compute task 1 to the collaborative node.

In the communication method provided in this embodiment of this application, the core network may determine, based on the compute task invocation request of the terminal device, whether the compute task that the terminal device requests to invoke meets the standard of the access communication and computing node for executing a compute task. If the standard is not met, the collaborative node is selected for the compute task that the terminal device requests to invoke, so that the access communication and computing node provides a communication resource for executing the compute task, and the collaborative node provides a compute resource for executing the compute task.

It should be noted that, in some scenarios, the method 400 or the method 500 may be performed after S301 to S305 in the method 300.

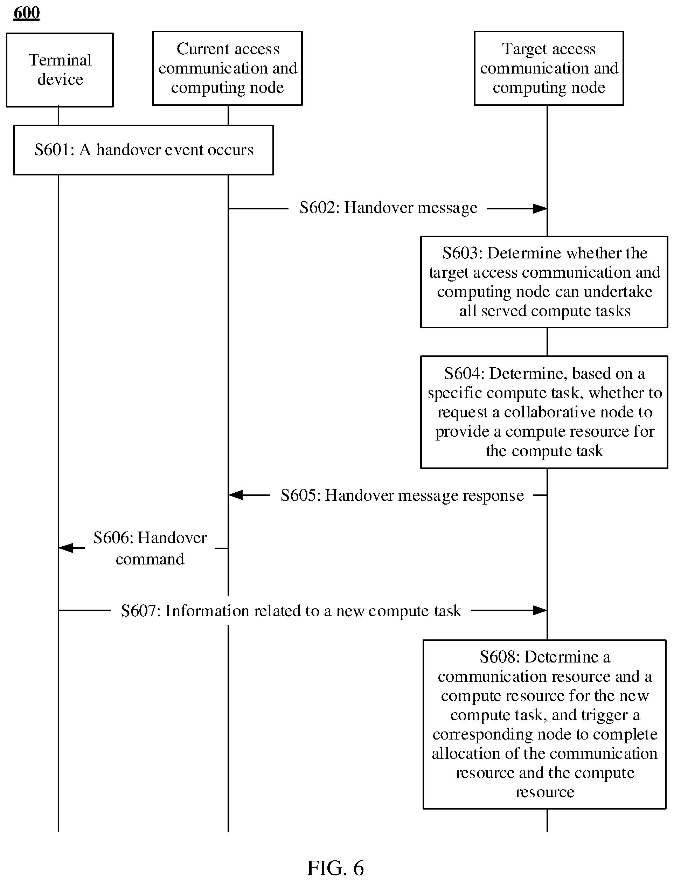

FIG. 6 is still another schematic flowchart of a communication method according to an embodiment of this application. The method 600 shown in FIG. 6 may be performed by a terminal device, a current access communication and computing node, and a target access communication and computing node. The terminal device may include the terminal device 10 in FIG. 2, and the current access communication and computing node and the target access communication and computing node may include the serving access communication and computing node 20 in FIG. 2. In some implementations, the method 600 may be performed before the method 300, the method 400, and the method 500, or may be performed after the method 300, the method 400, and the method 500. When the method 600 is performed before the method 300, the method 400, and the method 500, the target access communication and computing node is the access communication and computing node in the method 300, the method 400, and the method 500. When the method 600 is performed after the method 300, the method 400, and the method 500, the current access communication and computing node is the access communication and computing node in the method 300, the method 400, and the method 500. The method 600 may include some or all of the following steps.

S601: A handover event occurs.

For example, when an access communication and computing node of the terminal device needs to be switched from the current access communication and computing node to the target access communication and computing node, subsequent steps are performed.

For example, a condition for triggering handover includes one or more of the following:
(1) moving, by the terminal device, from a serving cell of the current access communication and computing node to a serving cell of the target access communication and computing node;
(2) preventive handover, where the target access communication and computing node can provide a communication link with better quality; and
(3) rescue handover, where for example, if quality of a communication link of the current access communication and computing node is lower than a threshold, handover is performed to the target access communication and computing node to ensure communication quality; for another example, if a received level of the target access communication and computing node is higher than a received level of the current access communication and computing node by a specific value (for example, the specific value is a rescue level handover margin), handover is performed to the target access communication and computing node to avoid frequent handover; and for still another example, if a timing advance (timing advance, TA) of the current access communication and computing node is greater than a threshold, handover is performed to the target access communication and computing node to control coverage of a network device and reduce system interference.

It should be understood that the foregoing conditions for triggering handover are merely examples for description. During actual implementation, handover may alternatively be performed when a case other than the foregoing several cases occurs.

S602: The current access communication and computing node sends a handover message to the target access communication and computing node.

For example, the handover message indicates a compute task of the terminal device (referred to as a served compute task below) that has been served by the current access communication and computing node. The served compute task includes a compute task that is being executed by the current access communication and computing node and that the terminal device requests to invoke. The handover message may include an identifier of the served compute task, and a performance requirement and/or feature information of each compute task in the served compute task. The feature information indicates information such as computational complexity and a computational amount of the compute task. Optionally, the handover message may further include information about a communication and computing node that provides a compute resource for each compute task in the served compute task (for example, an identifier, an IP address, and a port number of the communication and computing node that provides the compute resource for the compute task), and information about a compute resource that can be provided by the communication and computing node that provides the compute resource for the compute task or information about an available compute resource of the communication and computing node that provides the compute resource for the compute task.

Optionally, the handover message may further include related information (for example, a performance requirement and/or feature information) of another authorized compute task.

Optionally, that the current access communication and computing node sends the handover message to the target access communication and computing node may include: The current access communication and computing node sends the handover message to a core network, and then the core network sends the handover message to the target access communication and computing node.

S603: The target access communication and computing node determines whether the target access communication and computing node can undertake all served compute tasks.

If an available compute resource of the target access communication and computing node cannot meet a compute resource required by the served compute task, the target access communication and computing node may determine that the target access communication and computing node cannot undertake all the served compute tasks of the terminal device; or if an available compute resource of the target access communication and computing node can meet a compute resource required by the served compute task, the target access communication and computing node may determine that the target access communication and computing node can undertake all the served compute tasks of the terminal device.

In some implementations, the target access communication and computing node may determine, based on a communication capability (for example, a communication resource that can be provided for the terminal device) of the target access communication and computing node, whether the available compute resource of the target access communication and computing node can meet the compute resource required by the served compute task.

For example, when the target access communication and computing node determines that the target access communication and computing node cannot undertake all the served compute tasks of the terminal device, S604 may be performed; or when the target access communication and computing node determines that the target access communication and computing node can undertake all the served compute tasks of the terminal device, S605 may be directly performed.

S604: The target access communication and computing node determines, based on a specific compute task, whether to request a collaborative node to provide a compute resource for the compute task.

For example, for a specific implementation in which the target access communication and computing node requests the collaborative node to provide the compute resource for the compute task, refer to the descriptions in the case 2 and/or the case 3 in the method 300. Details are not described herein again.

S605: The target access communication and computing node sends a handover message response to the current access communication and computing node.

For example, the handover message response indicates that the target access communication and computing node is ready to receive a compute task request from the terminal device.

In some implementations, the handover message response may include function invocation information of the target access communication and computing node. The function invocation information includes an address for remotely invoking at least one compute task by the terminal device and/or compute task invocation identification information. For example, the address for remotely invoking the at least one compute task by the terminal device may include one or more of an identifier, an IP address, and a port number of the target access communication and computing node. The compute task invocation identification information may include one or more of a function name of a compute function required for executing the compute task, an API name or a universal identifier of the compute function required for executing the compute task, and a temporary identifier allocated to a compute task that is being executed.

In some other implementations, the handover message response may further include information about a collaborative node newly confirmed by the target access communication and computing node for the compute task of the terminal device.

Optionally, that the target access communication and computing node sends the handover message response to the current access communication and computing node may include: The target access communication and computing node sends the handover message response to the core network, and then the core network sends the handover message response to the current access communication and computing node.

S606: The current access communication and computing node sends a handover command to the terminal device.

For example, the handover command indicates that the terminal device is to send a subsequent compute task invocation request to the target access communication and computing node.

In some implementations, the handover command may include the function invocation information of the target access communication and computing node.

S607: The terminal device sends information related to a new compute task to the target access communication and computing node.

For example, the information related to the new compute task includes an invocation request of another authorized compute task, or may include information about another compute task that the terminal device needs to request the target access communication and computing node to invoke. The other compute task is not included in the served compute task and another authorized compute task.

S608: The target access communication and computing node determines a communication resource and a compute resource for the new compute task, and triggers a corresponding node to complete allocation of the communication resource and the compute resource.

For example, for a manner in which the target access communication and computing node determines the communication resource and the compute resource for the new compute task after receiving the information related to the new compute task and a specific implementation of triggering the corresponding node to complete allocation of the communication resource and the compute resource, reference may be made to the descriptions in the method 300 (for example, S306 to S312f). Details are not described herein again.

In the communication method provided in this embodiment of this application, when the access communication and computing node needs to be changed due to a cause such as a location change of the terminal device, the target access communication and computing node may determine, based on the available compute resource of the target access communication and computing node, whether the target access communication and computing node can provide compute resources for all the served compute tasks of the terminal device; and when the target access communication and computing node cannot provide compute resources for all the served compute tasks, request the collaborative node for support. In addition, the target access communication and computing node may further provide communication resource and compute resource support for a compute task that the terminal device subsequently requests to invoke.

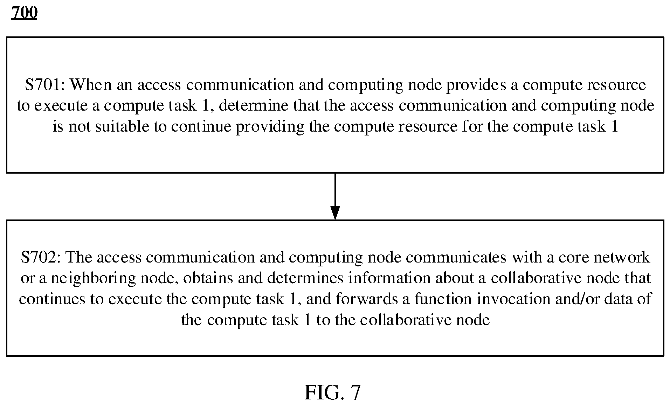

FIG. 7 is still another schematic flowchart of a communication method according to an embodiment of this application. The method 700 shown in FIG. 7 may be performed by an access communication and computing node, and the method may be performed after the method 300, the method 400, or the method 500. The method 700 may include the following steps.

S701: When the access communication and computing node provides a compute resource to execute a compute task 1, determine that the access communication and computing node is not suitable to continue providing the compute resource for the compute task 1.

It should be noted that the access communication and computing node is no longer suitable to continue providing the compute resource for the compute task 1 in the following several cases:
Case 1: When or after the access communication and computing node receives, from a core network or a terminal device, a request or an indication for executing a compute task 2 (refer to S301 to S304 in the method 300, or S401 to S403 in the method 400), it is determined that a compute resource of the access communication and computing node cannot meet performance requirements of the compute task 1 and the compute task 2, and a performance requirement of the compute task 2 needs to be preferentially ensured (for example, the compute task 2 has a higher priority or a higher performance requirement).
Case 2: Performance of a communication connection that can be provided by the access communication and computing node for the compute task 1 deteriorates (for example, a communication latency of the compute task increases), and consequently a compute resource required by the compute task 1 increases, but an available compute resource of the access communication and computing node cannot meet an increased compute resource requirement.
Case 3: A communication requirement of a terminal device served by the access communication and computing node increases. Because compute resources need to be consumed during communication resource scheduling of the access communication and computing node, when the communication requirement of the terminal device served by the access communication and computing node increases, scheduling communication resources to ensure a communication connection may consume a large quantity of available compute resources of the access communication and computing node. Consequently, remaining compute resources of the access communication and computing node are insufficient to meet a computing requirement of the compute task 1.

It should be understood that the foregoing several cases are merely examples for description. During actual implementation, there may be another case in which the access communication and computing node is no longer suitable to continue providing the compute resource for the compute task 1. This is not specifically limited in this embodiment of this application.

S702: The access communication and computing node communicates with the core network or a neighboring node, determines a collaborative node that continues to execute the compute task 1, and forwards a function invocation and/or data of the compute task 1 to the collaborative node.

For a specific implementation in which the access communication and computing node determines the collaborative node that continues to execute the compute task 1, refer to the descriptions in S311a to S311f or the descriptions in S312a to S312f in the method 300. Details are not described herein again.

According to the communication method provided in this embodiment of this application, a method for determining a collaborative node for a compute task that is being executed is provided. When execution of the compute task is not completed, and the access communication and computing node cannot continue providing a compute resource for the compute task, a probability of a compute task execution failure can be reduced according to the foregoing method.

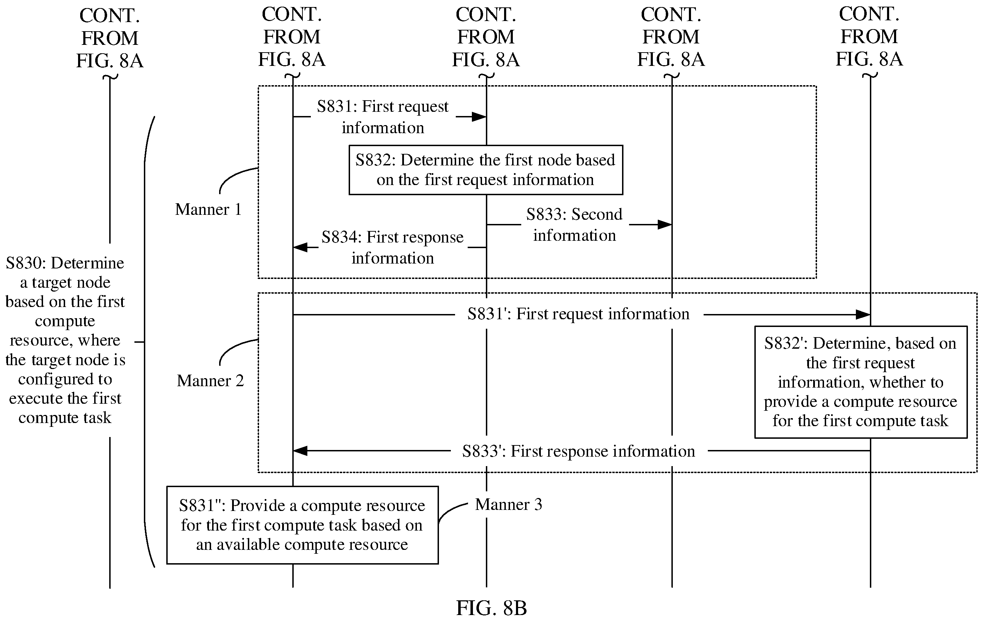

FIG. 8A and FIG. 8B show still another schematic flowchart of a communication method according to an embodiment of this application. The method 800 is performed by a terminal device, a fifth node, and a core network. The terminal device may include the terminal device or a component (for example, a chip or a module) in the terminal device in any one of the methods 300 to 700. The fifth node may include the access communication and computing node or a component (for example, a chip or a module) in the access communication and computing node in any one of the methods 300 to 700. The core network may include the core network or a component (for example, a chip or a module) in the core network in any one of the methods 300 to 700. In some scenarios, the method 800 further requires participation of a collaborative node (for example, a first node or a second node), and the collaborative node may include the collaborative node or a component (for example, a chip or a module) in the collaborative node in any one of the methods 300 to 700. The method may include S810 to S830. Details are as follows:
S810: The fifth node obtains compute task information, where the compute task information includes a performance requirement of a first compute task.

For example, the first compute task may include the compute task 1 in the foregoing embodiments.

In some implementations, the compute task information may include the information about the authorized computing service or the authorized computing service information in the method 300, or the compute task information may include the compute task allocation information 2 in the method 400.

In some implementations, the performance requirement of the first compute task indicates a computation latency for executing the first compute task, or a total latency for executing the first compute task, where the total latency includes a communication latency and the computation latency.

S820: The fifth node determines a first compute resource based on a first communication resource and the performance requirement of the first compute task.

The first communication resource is a communication resource used by the fifth node for the first compute task, and the first compute resource is used to execute the first compute task.

For example, the first communication resource may include the resource required for communication that is allocated by the access communication and computing node to the compute task in the foregoing embodiments. The first compute resource may be the compute resource 1 in the foregoing embodiments.

S830: The fifth node determines a target node based on the first compute resource, where the target node is configured to execute the first compute task.

The fifth node may determine the target node in one of a manner 1, a manner 2, and a manner 3. Details are as follows:

### The manner 1 includes the following steps:

S831: The fifth node sends first request information to the core network.

In some implementations, the first compute task includes at least one compute subtask, and the first request information is used to request to use a second compute resource to execute the at least one compute subtask.

For example, before S831 is performed, the fifth node determines not to provide all compute resources for the first compute task. For a specific implementation, refer to the descriptions in S309. Details are not described herein again.

For example, the first request information may include the collaborative node allocation request in S311a (or S408a).

S832: The core network determines the first node based on the first request information.

The core network determines the second compute resource based on the first request information. Further, the core network determines the first node based on an available compute resource of each of at least one collaborative node and the second compute resource, where the at least one collaborative node includes the first node.

For example, the at least one collaborative node is a neighboring node of the fifth node. For a specific implementation in which the core network determines the at least one collaborative node and the first node, refer to the descriptions in S311b. Details are not described herein again.

S833: The core network sends second information to the first node.

The second information indicates that the first node is to provide the second compute resource for the first compute task. For example, the second information may include the compute task allocation information 1 in S311c.

S834: The core network sends first response information to the fifth node.

The first response information indicates that the first node provides the second compute resource for the first compute task. For example, the first response information may include the collaborative node allocation response in S311d (or S408d).

Further, the fifth node determines, based on the first response information, that the target node includes the first node.

It should be noted that S833 and S834 may be performed simultaneously, or S834 may be performed before S833.

It should be further noted that the first node may include one collaborative node, or may include a plurality of collaborative nodes.

In some implementations, when receiving the second information and determining that the first node can provide the second compute resource for the first compute task, the first node sends response information to the core network, where the response information indicates that the first node can provide the compute resource for the first compute task. Further, when receiving the response information that is from the first node and that indicates that the first node can provide the compute resource for the first compute task, the core network performs S834.

In some other implementations, when receiving the second information and determining that the first node cannot provide the second compute resource for the first compute task (for example, an available compute resource is less than the second compute resource), the first node sends response information to the core network, where the response information indicates that the first node cannot provide the compute resource for the first compute task. Further, when receiving the response information that is from the first node and that indicates that the first node cannot provide the compute resource for the first compute task, the core network re-determines another collaborative node for the first compute task.

### The manner 2 includes the following steps:

S831': The fifth node sends first request information to the second node.

For example, before S831' is performed, the fifth node determines not to provide all compute resources for the first compute task. For a specific implementation, refer to the descriptions in S309. Details are not described herein again.

In some implementations, the first compute task includes at least one compute subtask, and the first request information is used to request to use a second compute resource to execute the at least one compute subtask.

For example, the first request information may include the compute task collaboration request in S312a (or S409a).

S832': The second node determines, based on the first request information, whether to provide a compute resource for the first compute task.

For example, the second node determines the second compute resource based on the first request information. Further, the second node determines, based on an available compute resource of the second node and the second compute resource, whether to provide the second compute resource for the first compute task.

S833': The second node sends first response information to the fifth node.

In some implementations, the first response information indicates that the second node determines to execute the first compute task, and the second node provides the second compute resource for the first compute task. For example, the first response information may include the compute task collaboration response in S312d (or S409d).

Further, the fifth node determines, based on the first response information, that the target node includes the second node.

For example, the second compute resource may be all compute resources required by the first compute task, for example, the compute resource 1 in the foregoing embodiments; or the second compute resource may be a part of compute resources required by the first compute task, for example, the compute resource 2 or the compute resource 3 in the foregoing embodiments.

In some implementations, the first request information in the manner 1 and the manner 2 includes information about the second compute resource.

In some other implementations, when the second compute resource is all the compute resources required by the first compute task, the first request information in the manner 1 and the manner 2 includes information about the first communication resource and at least one of the following: an identifier of the first compute task, first feature information of the first compute task, and the performance requirement of the first compute task, where the first feature information indicates computational complexity and/or a computational amount of the first compute task.

In an example, in the manner 1, the first request information may include the information about the first communication resource and the identifier of the first compute task. The core network determines the performance requirement of the first compute task based on the identifier of the first compute task and pre-stored or pre-configured computing service subscription information, and then determines the second compute resource based on the first communication resource and the performance requirement of the first compute task. When the second compute resource is used to execute the at least one subtask of the first compute task, the performance requirement of the first compute task may be met.

In another example, the first request information may include the information about the first communication resource and the performance requirement of the first compute task, and the core network or the second node determines the second compute resource based on the first communication resource and the performance requirement of the first compute task. When the second compute resource is used to execute the at least one subtask of the first compute task, the performance requirement of the first compute task may be met.

In still another example, the first request information may include the information about the first communication resource and the first feature information of the first compute task, and the core network or the second node determines the second compute resource based on the first communication resource and the first feature information. For example, if the computational complexity or the computational amount that is of the first compute task and that is indicated by the first feature information is greater than a first value, and a communication latency between the terminal device and an access communication device that is caused by the first communication resource is greater than a second value, the second compute resource allocated to the first compute task is a resource 1. If the computational complexity or the computational amount that is of the first compute task and that is indicated by the first feature information is greater than the first value, and the communication latency between the terminal device and the access communication device that is caused by the first communication resource is less than or equal to the second value, the second compute resource allocated to the first compute task is a resource 2. The resource 1 is greater than the resource 2.

It should be noted that the second node may include one collaborative node, or may include a plurality of collaborative nodes.

In some implementations, when receiving the first request information and determining that the second node cannot provide the second compute resource for the first compute task (for example, the available compute resource is less than the second compute resource), the second node sends response information to the fifth node, where the response information indicates that the second node cannot provide the second compute resource for the first compute task. Further, when receiving the response information that is from the second node and that indicates that the second node cannot provide the compute resource for the first compute task, a receiving communication and computing node re-determines another collaborative node for the first compute task.

In some other implementations, when the second compute resource is a part of compute resources required by the first compute task, the first request information in the manner 1 and the manner 2 includes at least one of the following: an identifier of the first compute task, feature information of the at least one compute subtask of the first compute task, and a performance requirement of the at least one compute subtask, where the feature information of the at least one compute subtask indicates computational complexity and/or a computational amount of the at least one compute subtask.

### The manner 3 includes the following steps:

S831": The fifth node provides a compute resource for the first compute task based on an available compute resource of the fifth node.

It should be understood that when the fifth node provides the compute resource for the first compute task, the target node includes the fifth node.

In some implementations, the first compute task includes at least one compute subtask, and that the receiving communication and computing node provides the compute resource for the first compute task includes: The fifth node selects at least one function instance from a function instance of the fifth node, or triggers deployment of at least one function instance. The at least one function instance is associated with a third compute resource, and the third compute resource is used to execute the at least one compute subtask.

The third compute resource may be all compute resources required by the first compute task; or the third compute resource may be a part of compute resources required by the first compute task.

During actual implementation, the fifth node may determine the target node in one of the manner 1, the manner 2, and the manner 3, that is, the target node is one of the first node, the second node, or the fifth node; may determine the target node based on a combination of the manner 1 and the manner 3, that is, the target node includes the first node and the fifth node; or may determine the target node based on a combination of the manner 2 and the manner 3, that is, the target node includes the second node and the fifth node.

When the manner 1 is combined with the manner 3, S831" may be performed before S831; or when the manner 2 is combined with the manner 3, S831" may be performed before S831'. In the foregoing scenario, the second compute resource may be a part of compute resources required by the first compute task. Further, the first request information may include information used to determine the first compute resource and information about a compute resource (namely, the third compute resource) that can be provided by the fifth node for the first compute task, so that the core network or the second node determines the second compute resource. The information used to determine the first compute resource includes the first compute resource; or the information used to determine the first compute resource includes the information about the first communication resource and at least one of the performance requirement of the first compute task and the first performance requirement.

When the target node includes the first node or the second node, the method further includes: The fifth node receives second request information from the terminal device, where the second request information is used to request to invoke a function for executing the first compute task. The fifth node sends the second request information to the target node.

For example, the second request information may include the function invocation in the foregoing embodiments.

When the target node includes the first node or the second node, the method further includes: The fifth node receives first data from the terminal device, where the first data includes data requested to be processed by the first compute task. The fifth node sends the first data to the target node.

For example, for a specific implementation in which the fifth node sends the second request information and/or the first data to the target node, reference may be made to the descriptions in S311f. Details are not described herein again.

In some implementations, before the fifth node receives the second request information and/or the first data, the fifth node updates or creates a communication connection, where the communication connection is used to carry a function invocation and/or data transmission of the first compute task. For example, the fifth node receives the second request information and/or the first data from the terminal device through the communication connection. For a specific implementation in which the fifth node updates or creates the communication connection, refer to the descriptions in S308. Details are not described herein again.

It may be understood that, the manner 1 and the manner 2 may be summarized as follows: A collaborative node receives third information from a seventh node, where the third information includes information used to determine a compute resource, and the compute resource is used to execute the first compute task. The collaborative node determines the compute resource based on the third information, and determines, based on the compute resource and an available compute resource of the current node, whether to provide the compute resource for the first compute task.

In some implementations, the method further includes: The collaborative node sends third response information to the seventh node, where the third response information indicates that the current node provides the compute resource for the first compute task, or the current node does not provide the compute resource for the first compute task.

When the seventh node is the access communication and computing node, the third information includes the first request information; or when the seventh node is the core network, the third information includes the second information. The current node is the collaborative node.

When the collaborative node determines to provide the compute resource for the first compute task, the method further includes: The collaborative node determines one or more function instances, and invokes, by using at least one of the one or more function instances, the compute resource required by the first compute task. For a specific implementation in which the collaborative node determines the one or more function instances, refer to the descriptions in S311e. Details are not described herein again.

Further, when receiving the second request information, the collaborative node executes the first compute task based on the second request information and the at least one of the one or more function instances. When receiving the first data, the collaborative node processes the first data by using the at least one of the one or more function instances.

In some implementations, before S810 to S830 are performed, the method further includes S810' to S830'. Details are as follows:
S810': The terminal device sends fourth request information to the core network.

The fourth request information includes information about at least one compute task that the terminal device requests to invoke.

In some implementations, the fourth request information includes information about a compute task that the terminal device expects to invoke. Further, the core network determines, based on compute task subscription information, the at least one compute task from the compute task that the terminal device expects to invoke. The compute task subscription information indicates a compute task for which a current network is capable of providing a service. For example, the fourth request information is the computing service request information in the method 300, and the compute task that the terminal device expects to invoke includes the compute task requested by the computing service request information. In other words, the compute task that the terminal device expects to invoke includes a subscribed compute task in the core network (or referred to as a compute task for which the current network can provide a service), or may further include an unsubscribed compute task (or referred to as a compute task for which the current network cannot provide a service). The compute task subscription information includes the computing service subscription information in the foregoing embodiments.

It should be noted that, in this embodiment of this application, invoking a compute task is not equivalent to executing the compute task, invoking a compute task may include providing or allocating a compute resource and a communication resource for the compute task, or invoking a compute task may include running one or more compute functions associated with the compute task, and executing a compute task is running one or more invoked compute functions based on a function invocation associated with the compute task.

It should be further noted that before S810' is performed, the terminal device sends a network access request to the fifth node, where the network access request is used to request to access the fifth node. After the terminal device accesses the fifth node, the terminal device may transparently transmit the fourth request information to the core network through the fifth node.

S820': The core network sends second response information to the terminal device.

The second response information indicates function invocation information of the fifth node, and the function invocation information may include an address for remotely invoking the at least one compute task by the terminal device and/or compute task invocation identification information.

It should be noted that, after the terminal device receives the compute task invocation identification information, when a compute task is subsequently invoked, a compute task invocation identifier may be carried in an invocation request of the compute task, so that the fifth node quickly identifies the compute task invoked by the terminal device.

During actual implementation, the core network may transparently transmit the second response information to the terminal device through the fifth node; or the core network may send the second response information to the fifth node, and the fifth node forwards the second response information to the terminal device.

For example, the second response information may include the authorization response in the foregoing embodiments.

S830': The core network sends first indication information to the fifth node.

The first indication information indicates at least one of the following: the fifth node provides a communication resource for the at least one compute task; the fifth node provides a communication resource and a compute resource for the at least one compute task; or the at least one compute task is a compute task authorized by the core network.

Before S830' is performed, the method further includes: The core network authorizes the at least one compute task. For a specific implementation in which the core network authorizes the at least one compute task, refer to the descriptions in S302. Details are not described herein again.

In some implementations, the first indication information includes feature information and/or a performance requirement of each of the at least one compute task, and the feature information indicates computational complexity and/or a computational amount of each compute task.

In some implementations, the compute task information in S810 may be obtained based on the first indication information. Specifically, the following two implementations are included:
In an implementation, the fifth node stores information included in the first indication information. For example, the fifth node stores the feature information and/or the performance requirement of each of the at least one compute task. Further, the fifth node receives third request information from the terminal device, where the third request information is used to request to invoke the first compute task, and the third request information includes the identifier of the first compute task. In this case, obtaining the compute task information in S810 may include: obtaining, based on the identifier of the first compute task, the compute task information from the stored feature information and/or performance requirement of each of the at least one compute task. For example, if the first compute task is the compute task 1 in the method 300, the first indication information is the authorized computing service information in the method 300, and the third request information is the invocation request in S306. It should be noted that the third request information may include the second request information.

In another implementation, if the at least one compute task includes the first compute task, and the fourth request information indicates that the terminal device requests to invoke the first compute task, obtaining the compute task information in S810 may include: obtaining the compute task information from the first indication information. For example, if the first compute task is the compute task 1 in the method 400, the fourth request information is the invocation request in S401, and the first indication information is the compute task allocation information 2 in the method 400.

In some implementations, the at least one compute task includes a second compute task, and the fifth node does not determine, for the second compute task, a node that provides a compute resource for the second compute task, but the core network determines the node that provides the compute resource for the second compute task. For example, the second compute task is the compute task 1. For a specific implementation in which the core network determines the node that provides the compute resource for the second compute task, refer to the descriptions in the method 500.

For example, when the core network determines the node that provides the compute resource for the second compute task, the method further includes: The core network determines, based on the available compute resource of the fifth node, the available compute resource of each of the at least one collaborative node, and at least one of second feature information of the second compute task and a performance requirement of the second compute task, that a sixth node provides the compute resource for the second compute task, where the second feature information indicates computational complexity and/or a computational amount of the second compute task, and the at least one collaborative node includes the sixth node. Further, the core network sends first information to the sixth node, where the first information includes information about the second compute task. The first information indicates that the sixth node is to provide the compute resource for the second compute task.

In some implementations, the first information includes an identifier of the second compute task, and the second feature information and/or the performance requirement of the second compute task. For example, the first information may include the compute task allocation information 3 in S504.

In the foregoing scenario, the first indication information may further include information indicating that the sixth node provides the compute resource for the second compute task. For example, the first indication information includes the identifier of the sixth node, and the first indication information may further include information about the compute resource provided by the sixth node for the second compute task.

In other words, when the core network determines the node that provides the compute resource for the second compute task, where an example in which the second compute task is the compute task 1 is used, the fourth request information in S810' may include the invocation request in S501, and the first indication information may include the compute task node allocation information in S506.

During actual implementation, the first indication information and the second response information may be sent to the fifth node by using same signaling, and further the fifth node sends the second response information to the terminal device, as described in S303, S403, or S506.

When the core network determines the node that provides the compute resource for the second compute task, the method further includes: The core network obtains node resource information, where the node resource information indicates a connection relationship between the fifth node and at least one node. The core network determines the sixth node from the at least one node based on the node resource information. The node resource information may be the communication and computing node resource information in the foregoing embodiments. For a specific implementation in which the core network determines the at least one collaborative node based on the node resource information, refer to the descriptions in S503.

When the core network determines the node that provides the compute resource for the second compute task, the method may further include: The core network obtains function deployment information, where the function deployment information indicates the available compute resource of the fifth node and the available compute resource of each of the at least one collaborative node. The function deployment information may include the function deployment policy and/or the function deployment status in the foregoing embodiments.

In some implementations, before S810 to S830 are performed, the terminal device may camp on a serving cell of the fourth node, that is, the fourth node provides communication resource and compute resource support for a compute task of the terminal device. Subsequently, because a handover event occurs, the fifth node provides communication resource and compute resource support for the terminal device. In this case, the method further includes: The fifth node receives a first message from a third node, where the first message indicates to switch the at least one compute task, the at least one compute task includes the first compute task, the at least one compute task is provided with a communication resource by the fourth node, and the third node includes the fourth node. The fifth node sends a response message of the first message to the third node.

In some implementations, the fourth node is a source access communication and computing node, and the third node is the core network. The first message may include the handover message in the method 600, and the response message of the first message may include the handover message response in the method 600.

The first message includes at least one of the following: a performance requirement of each of the at least one compute task; feature information of each compute task, where the feature information indicates computational complexity and/or a computational amount of each compute task; information about a collaborative node that provides a compute resource for each compute task; or information about an available compute resource of a collaborative node that provides a compute resource for each compute task.

The response message of the first message includes at least one of the following: function invocation information, where the function invocation information includes an address for remotely invoking the at least one compute task by the terminal device; or node information, where the node information indicates a node that is newly added relative to the fourth node and that is configured to provide a compute resource for the at least one compute task.

For example, the at least one compute task may include the served compute task in the method 600. For a specific implementation in which the fifth node determines the newly added collaborative node, refer to the descriptions in S604. Details are not described herein again.

Further, the fifth node may store information that is about the at least one compute task and that is included in the first message. Obtaining the compute task information in S810 may include: obtaining the compute task information from the information about the at least one compute task.

In some implementations, before the terminal device is handed over from the fourth node to the fifth node, the fourth node is performing the first compute task. After the terminal device is handed over to the access communication and computing node, the terminal device sends a function invocation and/or data of the first compute task to the fifth node, and the fifth node provides communication resource and compute resource support for the first compute task.

In some implementations, after S810 to S830 are performed to allocate the communication resource and the compute resource to the first compute task, and when the fifth node provides all or a part of compute resources for the first compute task, the method may further include the following S810" and S820":
S810": The fifth node determines that the fifth node is no longer suitable for providing the compute resource for the first compute task.

For example, for a specific implementation in which the fifth node determines that the fifth node is no longer suitable for providing the compute resource for the first compute task, reference may be made to the descriptions in S701. Details are not described herein again.

S820": The fifth node re-performs steps S820 and S830, and selects a collaborative node for the first compute task, where the collaborative node continues to provide the compute resource for the first compute task.

It should be understood that the reselected collaborative node provides, for the first compute task, the compute resource previously provided by the fifth node. For example, if the fifth node provides compute resources for a part of compute subtasks of the first compute task before S810", the reselected collaborative node continues to provide the compute resources for the part of compute subtasks; or if the fifth node provides compute resources for all compute subtasks of the first compute task before S810", the reselected collaborative node continues to provide the compute resources for all the compute subtasks.

In the communication method provided in this embodiment of this application, the access communication and computing node of the terminal device or the core network may determine, based on a communication resource authorized by the access communication and computing node for a compute task, a compute resource required by the compute task, and further determine a node that provides the compute resource. This helps reduce a latency for executing the compute task, to meet a performance requirement of the compute task.

The communication methods provided in embodiments of this application are described above with reference to FIG. 1 to FIG. 8B. In embodiments of this application, unless otherwise specified or there is a logical conflict, terms and/or descriptions in embodiments are consistent and may be mutually referenced, and technical features in different embodiments may be combined based on an internal logical relationship thereof to form a new embodiment.

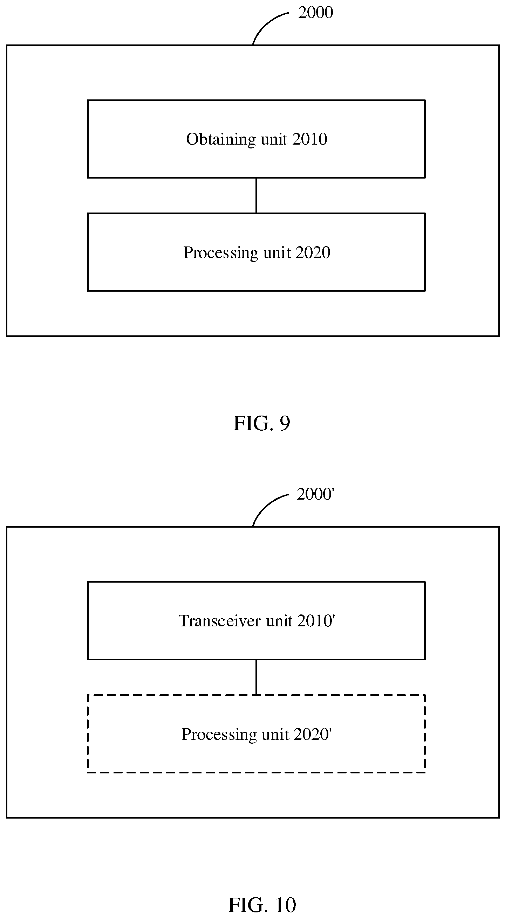

Communication apparatuses provided in embodiments of this application are described below in detail with reference to FIG. 9 to FIG. 12. It should be understood that descriptions of apparatus embodiments correspond to the descriptions of the method embodiments. Therefore, for content that is not described in detail, refer to the foregoing method embodiments. For brevity, details are not described herein again.

FIG. 9 is a block diagram of a communication apparatus 2000 according to an embodiment of this application. The communication apparatus 2000 may be an access communication and computing node, or may be a chip or a module in the access communication and computing node, and is configured to implement actions performed by the access communication and computing node in the embodiments of FIG. 3A to FIG. 8B. For details, refer to related descriptions in the foregoing method embodiments.

The communication apparatus 2000 includes an obtaining unit (or referred to as an obtaining module) 2010 and a processing unit (or referred to as a processing module) 2020. The following describes the obtaining unit 2010 and the processing unit 2020 by using examples.

The obtaining unit 2010 may be configured to implement a corresponding information receiving or information obtaining function, for example, obtaining compute task information. The processing unit 2020 may be configured to implement a corresponding processing function, for example, determining a target node based on a first compute resource required by a first compute task.

In some implementations, the communication apparatus 2000 may further include a transceiver unit (or referred to as a transceiver module), and the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again. The transceiver unit may implement a corresponding communication function, for example, perform an information receiving and/or information sending action performed by the access communication and computing node in the foregoing embodiments. For example, the transceiver unit may be configured to send first request information to a core network or a second node. In some implementations, the transceiver unit includes the obtaining unit.

Optionally, the communication apparatus 2000 further includes a storage unit. The storage unit may be configured to store instructions and/or data. The processing unit 2020 may read the instructions and/or the data in the storage unit, to enable the apparatus to implement related actions performed by the access communication and computing node in the foregoing method embodiments.

For example, when the communication apparatus is applied to the method shown in FIG. 8A and FIG. 8B, the obtaining unit 2010 is configured to obtain compute task information, where the compute task information includes a performance requirement of a first compute task. The processing unit 2020 is configured to determine a first compute resource based on a first communication resource and the performance requirement of the first compute task, where the first communication resource is a communication resource authorized to the first compute task, and the first compute resource is used to execute the first compute task. The processing unit 2020 is further configured to determine a target node based on the first compute resource, where the target node is configured to execute the first compute task.

For details of other implementations, refer to detailed descriptions of the embodiment of FIG. 8A and FIG. 8B. Details are not described herein again. It should be understood that specific processes of performing the foregoing corresponding processes by the components are described in detail in the foregoing method embodiments. For brevity, details are not described herein again.

FIG. 10 is a block diagram of a communication apparatus 2000' according to an embodiment of this application. The communication apparatus 2000' may be a core network, a collaborative node, or a terminal device, or may be a component (for example, a chip or a module) in the core network, the collaborative node, or the terminal device, and is configured to implement the methods in the embodiments of FIG. 3A to FIG. 8B. For details, refer to related descriptions in the method embodiments. The chip may be, for example, a system on chip (system on chip, SoC).

The communication apparatus 2000' includes a transceiver unit 2010'. The following describes the transceiver unit 2010' by using an example.

The transceiver unit 2010' may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again. The transceiver unit 2010' may implement a corresponding communication function. The transceiver unit 2010' may also be referred to as a communication interface or a communication module.

It should be noted that the communication apparatus 2000' may include the sending unit, but does not include the receiving unit. Alternatively, the communication apparatus 2000' may include the receiving unit, but does not include the sending unit. Specifically, this may depend on whether the foregoing solution performed by the communication apparatus 2000' includes a sending action and a receiving action.

If the communication apparatus 2000' is a core network or a component in the core network, for example, the transceiver unit 2010' may be configured to: receive first request information from a terminal device, and send second response information to the terminal device.

Optionally, the communication apparatus 2000' may further include a processing unit 2020', and the processing unit 2020' is configured to perform content related to steps such as processing and coordination of the core network.

If the communication apparatus 2000' is a collaborative node or a component in the collaborative node, for example, the transceiver unit 2010' is configured to receive first request information from a core network or an access communication node.

Optionally, the communication apparatus 2000' may further include a processing unit 2020', and the processing unit 2020' is configured to perform content related to steps such as processing and coordination of the collaborative node.

If the communication apparatus 2000' is a terminal device or a component in the terminal device, for example, the transceiver unit 2010' is configured to send fourth request information to a core network.

Optionally, the communication apparatus 2000' may further include a processing unit 2020', and the processing unit 2020' is configured to perform content related to steps such as processing and coordination of the terminal device.

The foregoing content is merely used as an example for description. When the communication apparatus 2000' is a core network, a collaborative node, or a terminal device, or a component in the core network, the collaborative node, or the terminal device, the communication apparatus 2000' is responsible for performing methods or steps related to the first network device, the second network device, or the third network device in the method embodiments.

Optionally, the communication apparatus 2000' further includes a storage unit, and the storage unit is configured to store a program or code used to perform the foregoing methods. In other words, the storage unit may be configured to store instructions and/or data, and the processing unit 2020' may read the instructions and/or the data in the storage unit, to enable the communication apparatus 2000' to implement the method embodiments. For example, the communication apparatus 2000' may be configured to perform the solution shown in FIG. 8A and FIG. 8B.

When the communication apparatus 2000' is a core network or a component in the core network, the transceiver unit 2010' is configured to receive fourth request information from a terminal device, where the fourth request information includes information about at least one compute task that the terminal device requests to invoke; and the transceiver unit 2010' is further configured to send second response information to the terminal device based on the fourth request information, where the second response information includes function invocation information of a fifth node, and the function invocation information includes an address for remotely invoking the at least one compute task by the terminal device.

Optionally, the transceiver unit 2010' may be further configured to receive first request information from the fifth node, where the first request information is used to request to use a second compute resource to execute at least one compute subtask. The processing unit 2020' is configured to: determine the second compute resource based on the first request information; and determine a first node based on an available compute resource of each of at least one node and the second compute resource. The transceiver unit 2010' is further configured to send first response information to the fifth node, where the first response information indicates that the first node provides the second compute resource for the first compute task.

When the communication apparatus 2000' is a collaborative node or a component in the collaborative node, the transceiver unit 2010' is configured to receive third information from a seventh node, where the third information includes information used to determine a compute resource, and the compute resource is used to execute a first compute task. The processing unit 2020' is configured to: determine the compute resource based on the third information, and determine, based on the compute resource and an available compute resource of a current node, whether to provide the compute resource for the first compute task.

When the communication apparatus 2000' is a terminal device or a component in the terminal device, the transceiver unit 2010' is configured to send fourth request information to a core network, where the fourth request information includes information about at least one compute task that the terminal device requests to invoke. The transceiver unit 2010' is further configured to receive second response information from the core network, where the second response information includes function invocation information of a fifth node, and the function invocation information includes an address for remotely invoking the at least one compute task.

It should be understood that specific processes of performing the foregoing corresponding steps by the units are described in detail in the foregoing method embodiments. For brevity, details are not described herein again.

It should be further understood that the apparatus 2000 and the apparatus 2000' are embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2000 or the apparatus 2000' may be specifically the communication apparatus in the foregoing embodiments, and may be configured to perform procedures and/or steps corresponding to the communication apparatus in the method embodiments. To avoid repetition, details are not described herein again.

The apparatus 2000 or the apparatus 2000' in the foregoing solutions has a function of implementing corresponding steps performed by the communication apparatus (for example, the terminal device, the access communication and computing node, the collaborative node, or the core network) in the foregoing methods. The function may be implemented by hardware, or may be implemented by hardware executing corresponding software. The hardware or software includes one or more modules corresponding to the foregoing function. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform sending and receiving operations and related processing operations in the method embodiments.

In addition, the transceiver unit may also be a transceiver circuit (for example, may include a sending circuit, or may further include a receiving circuit), and the processing unit may be a processing circuit.

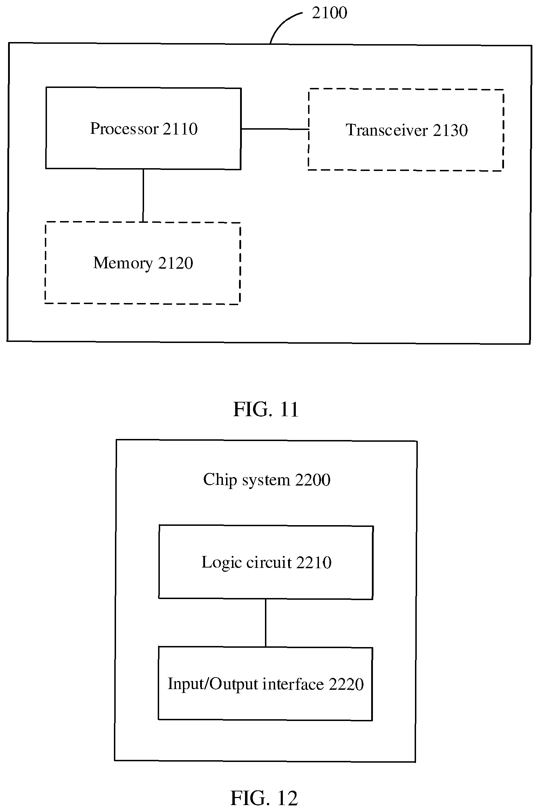

FIG. 11 is a diagram of another communication apparatus 2100 according to an embodiment of this application. The apparatus 2100 includes a processor 2110. The processor 2110 is coupled to a memory 2120. The memory 2120 is configured to store a computer program or instructions and/or data. The processor 2110 is configured to execute the computer program or the instructions stored in the memory 2120, or read the data stored in the memory 2120, to perform the methods in the foregoing method embodiments.

Optionally, there are one or more processors 2110.

Optionally, there are one or more memories 2120.

Optionally, the memory 2120 may also be referred to as a storage medium or a storage device. The memory 2120 may be integrated with the processor 2110, or may be disposed separately.

Optionally, as shown in FIG. 11, the apparatus 2100 further includes a transceiver 2130, and the transceiver 2130 is configured to: receive a signal and/or send a signal. For example, the processor 2110 is configured to control the transceiver 2130 to receive a signal and/or send a signal.

In an example, the processor 2110 may have a function of the processing unit 2020 shown in FIG. 9 or a function of the processing unit 2020' shown in FIG. 10, the memory 2120 may have a function of a storage unit, and the transceiver 2130 may have a function of the obtaining unit 2010 shown in FIG. 9 or a function of the transceiver unit 2010' shown in FIG. 10.

In a solution, the apparatus 2100 is configured to implement operations performed by the communication apparatus (for example, the terminal device, the access communication and computing node, the collaborative node, or the core network) in the method embodiments.

For example, the processor 2110 is configured to execute the computer program or the instructions stored in the memory 2120, to implement related operations of the communication apparatus in the foregoing method embodiments.

In some implementations, when the apparatus 2100 is a terminal device, the transceiver 2130 may include a transmitter machine, a receiver machine, a radio frequency circuit, an antenna, and an input/output apparatus. The processor 2110 is mainly configured to: process a communication protocol and communication data, control the terminal device, execute a software program, process data of the software program, and perform another operation. The memory 2120 is mainly configured to store the software program and data.

The radio frequency circuit is mainly configured to perform conversion between a baseband signal and a radio frequency signal and process the radio frequency signal.

The antenna is mainly configured to receive and send radio frequency signals in a form of an electromagnetic wave.

The input/output apparatus (for example, a touchscreen, a display, or a keyboard) is mainly configured to receive data input by a user and output data to the user.

It should be noted that some types of terminal devices may not have an input/output apparatus.

When data needs to be sent, the processor performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

In some other implementations, when the apparatus 2100 is a network device (for example, an access communication and computing node, a core network, or a collaborative node), the processor 2110 is mainly configured to perform baseband processing, control the network device, and perform another operation. The processor 2110 is usually a control center of the network device, and is configured to control the network device to perform processing operations on a network device side in the method embodiments, for example, determine a compute resource required for a compute task, and determine a node that provides the compute resource for the compute task. The memory 2120 is mainly configured to store computer program code and data. The transceiver 2130 is mainly configured to receive and send radio frequency signals and perform conversion between the radio frequency signal and a baseband signal. The transceiver 2130 may include an antenna and a radio frequency circuit (not shown in the figure). The radio frequency circuit is mainly configured to perform radio frequency processing.

The processor 2110 and the memory 2120 may include one or more boards, and each board may include one or more processors and one or more memories. The processor is configured to: read and execute a program in the memory to implement a baseband processing function and control the apparatus 2100. If there are a plurality of boards, the boards may be interconnected with each other to enhance a processing capability. In an optional implementation, a plurality of boards may share one or more processors, a plurality of boards share one or more memories, or a plurality of boards simultaneously share one or more processors.

In this embodiment of this application, the antenna and the radio frequency circuit that have sending and receiving functions may be considered as a transceiver module of the terminal device or the network device, and the processor that has a processing function may be considered as a processing module of the terminal device or the network device.

In some implementations, the processor 2110 may also be referred to as a processing unit, a processing board, a processing module, a processing apparatus, or the like. The transceiver 2130 may also be referred to as a transceiver unit, a transceiver machine, a transceiver apparatus, or the like.

When the apparatus 2100 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but is not limited to, these memories and any other appropriate type of memory.

FIG. 12 is a diagram of a chip system 2200 according to an embodiment of this application. The chip system 2200 (or may be referred to as a processing system) includes a logic circuit 2210 and an input/output interface (input/output interface) 2220.

The logic circuit 2210 may be a processing circuit in the chip system 2200. The logic circuit 2210 may be coupled and connected to a storage unit, and invoke instructions in the storage unit, to enable the chip system 2200 to implement the methods and functions in embodiments of this application. The input/output interface 2220 may be an input/output circuit in the chip system 2200, and outputs information processed by the chip system 2200, or inputs to-be-processed data or signaling information into the chip system 2200 for processing.

In a solution, the chip system 2200 is configured to implement operations performed by the communication apparatus (for example, the terminal device, the access communication and computing node, the collaborative node, or the core network) in the method embodiments.

For example, the logic circuit 2210 is configured to implement processing-related operations performed by the communication apparatus (for example, the terminal device, the access communication and computing node, the collaborative node, or the core network) in the method embodiments; and the input/output interface 2220 is configured to implement sending and/or receiving-related operations performed by the communication apparatus (for example, the terminal device, the access communication and computing node, the collaborative node, or the core network) in the method embodiments.

This application further provides a processor, configured to be coupled to a memory, and configured to perform the method and functions related to the terminal device, the access communication and computing node, the collaborative node, or the core network in any one of the foregoing embodiments.

Another embodiment of this application provides a computer program product including a computer program or instructions. When the computer program product runs on a computer, the method in the foregoing embodiments is implemented.

An embodiment of this application further provides a computer-readable storage medium. The computer-readable storage medium stores computer instructions used to implement the method performed by the communication apparatus (for example, the terminal device, the access communication and computing node, the collaborative node, or the core network) in the method embodiments.

For example, when the computer program is executed by a computer, the computer is enabled to implement the method performed by the communication apparatus (for example, the terminal device, the access communication and computing node, the collaborative node, or the core network) in the method embodiments.

An embodiment of this application further provides a computer program product, including instructions. When the instructions are executed by a computer, the method performed by the communication apparatus (for example, the terminal device, the access communication and computing node, the collaborative node, or the core network) in the method embodiments is implemented.

An embodiment of this application further provides a communication system. The communication system includes the terminal device, the access communication and computing node, and the core network in the foregoing embodiments. The terminal device, the access communication and computing node, and the core network are configured to perform the method in any one of the embodiments of FIG. 3A to FIG. 8B.

In some implementations, the communication system may further include a collaborative node, and the collaborative node is configured to perform actions performed by the collaborative node in any one of the embodiments of FIG. 3A to FIG. 8B.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the described system, apparatus, and unit, refer to a corresponding process in the method embodiments. Details are not described herein again.

In several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining compute task information, wherein the compute task information comprises a performance requirement of a first compute task;
determining a first compute resource based on a first communication resource and the performance requirement of the first compute task, wherein the first communication resource is a communication resource used for the first compute task, and the first compute resource is used to execute the first compute task; and
determining a target node based on the first compute resource, wherein the target node is configured to execute the first compute task.

2. The method according to claim 1, wherein the first compute task comprises at least one compute subtask, and determining the target node based on the first compute resource comprises:
sending first request information to a core network, wherein the first request information is used to request to use a second compute resource to execute the at least one compute subtask, and the first compute resource comprises the second compute resource;
receiving first response information from the core network, wherein the first response information indicates a first node, and the first node provides the second compute resource for the first compute task; and
determining, based on the first response information, that the target node comprises the first node.

3. The method according to claim 1, wherein the first compute task comprises at least one compute subtask, and determining the target node based on the first compute resource comprises:
sending first request information to a second node, wherein the first request information is used to request to use a second compute resource to execute the at least one compute subtask, and the first compute resource comprises the second compute resource;
receiving first response information from the second node, wherein the first response information indicates that the second node determines to execute the first compute task, and the second node provides the second compute resource for the first compute task; and
determining, based on the first response information, that the target node comprises the second node.

4. The method according to claim 2 or 3, wherein the first request information comprises information about the first communication resource and at least one of the following: an identifier of the first compute task, first feature information of the first compute task, and the performance requirement of the first compute task, wherein the first feature information indicates computational complexity and/or a computational amount of the first compute task.

5. The method according to any one of claims 1 to 4, wherein the method further comprises:
receiving second request information from a terminal device, wherein the second request information is used to request to invoke a function for executing the first compute task; and
sending the second request information to the target node.

6. The method according to any one of claims 1 to 5, wherein the method further comprises:
receiving first data from the terminal device, wherein the first data comprises data requested to be processed by the first compute task; and
sending the first data to the target node.

7. The method according to any one of claims 1 to 6, wherein the method further comprises:
updating or creating a communication connection, wherein the communication connection is used to carry a function invocation and/or data transmission of the first compute task.

8. The method according to any one of claims 1 to 7, wherein the first compute task comprises the at least one compute subtask, and the method further comprises:
selecting at least one function instance from a plurality of function instances, or triggering deployment of at least one function instance, wherein the at least one function instance is associated with a third compute resource, the third compute resource is used to execute the at least one compute subtask, and the first compute resource comprises the third compute resource.

9. The method according to any one of claims 1 to 8, wherein the method further comprises:
receiving a first message from a third node, wherein the first message indicates to switch at least one compute task, the at least one compute task comprises the first compute task, the at least one compute task is provided with a communication resource by a fourth node, and the third node comprises the fourth node; and
sending a response message of the first message to the third node.

10. The method according to claim 9, wherein the first message comprises at least one of the following:
a performance requirement of each of the at least one compute task;
feature information of each compute task, wherein the feature information indicates computational complexity and/or a computational amount of each compute task;
information about a node that provides a compute resource for each compute task; or
information about an available compute resource of a node that provides a compute resource for each compute task.

11. The method according to claim 9 or 10, wherein the response message of the first message comprises at least one of the following:
function invocation information, wherein the function invocation information comprises an address for remotely invoking the at least one compute task by the terminal device; or
node information, wherein the node information indicates a node that is newly added relative to the fourth node and that is configured to provide a compute resource for the at least one compute task.

12. The method according to any one of claims 1 to 11, wherein the method further comprises:
receiving first indication information from the core network, wherein the first indication information indicates at least one of the following: a communication resource is provided for the at least one compute task; a communication resource and a compute resource are provided for the at least one compute task; or the at least one compute task is a compute task authorized by the core network, wherein the at least one compute task comprises the first compute task.

13. The method according to claim 12, wherein the first indication information further comprises the feature information and/or the performance requirement of each of the at least one compute task, and the feature information indicates the computational complexity and/or the computational amount of each compute task.

14. The method according to any one of claims 1 to 13, wherein the method further comprises:
receiving third request information from the terminal device, wherein the third request information is used to request to invoke the first compute task, and the third request information comprises the identifier of the first compute task; and
obtaining the compute task information comprises:
obtaining the compute task information based on the identifier of the first compute task.

15. The method according to any one of claims 1 to 14, wherein the performance requirement of the first compute task indicates a computation latency for executing the first compute task, or a total latency for executing the first compute task, wherein the total latency comprises a communication latency and the computation latency.

16. The method according to any one of claims 1 to 15, wherein the method further comprises:
receiving a network access request of the terminal device, wherein the network access request is used to request to access a current node.

17. A communication method, comprising:
receiving fourth request information from a terminal device, wherein the fourth request information comprises information about at least one compute task that the terminal device requests to invoke; and
sending second response information to the terminal device based on the fourth request information, wherein the second response information comprises function invocation information of a fifth node, and the function invocation information comprises an address for remotely invoking the at least one compute task by the terminal device and/or compute task invocation identification information.

18. The method according to claim 17, wherein the method further comprises:
sending first indication information to the fifth node, wherein the first indication information indicates at least one of the following: the fifth node provides a communication resource for the at least one compute task; the fifth node provides a communication resource and a compute resource for the at least one compute task; or the at least one compute task is a compute task authorized by a core network.

19. The method according to claim 18, wherein the first indication information comprises feature information and/or a performance requirement of each of the at least one compute task, and the feature information indicates computational complexity and/or a computational amount of each compute task.

20. The method according to claim 19, wherein the at least one compute task comprises a second compute task, and the method further comprises:
determining, based on an available compute resource of the fifth node, an available compute resource of each of at least one node, and at least one of second feature information of the second compute task and a performance requirement of the second compute task, that a sixth node provides a compute resource for the second compute task, wherein the second feature information indicates computational complexity and/or a computational amount of the second compute task, and the at least one node comprises the sixth node; and
sending first information to the sixth node, wherein the first information comprises information about the second compute task.

21. The method according to claim 20, wherein the first information comprises an identifier of the second compute task and at least one of the second feature information and the performance requirement of the second compute task.

22. The method according to claim 20 or 21, wherein the first indication information further comprises information indicating that the sixth node provides the compute resource for the second compute task.

23. The method according to any one of claims 20 to 22, wherein the method further comprises:
obtaining node resource information, wherein the node resource information indicates a connection relationship between the fifth node and the at least one node; and
determining the sixth node in the at least one node based on the node resource information.

24. The method according to any one of claims 20 to 23, wherein the method further comprises:
obtaining function deployment information, wherein the function deployment information indicates the available compute resource of the fifth node and the available compute resource of each node.

25. The method according to any one of claims 17 to 24, wherein the at least one compute task comprises a first compute task, the first compute task comprises at least one compute subtask, and the method further comprises:
receiving first request information from the fifth node, wherein the first request information is used to request to use a second compute resource to execute the at least one compute subtask;
determining the second compute resource based on the first request information;
determining a first node based on the available compute resource of each of the at least one node and the second compute resource, wherein the at least one node comprises the first node; and
sending first response information to the fifth node, wherein the first response information indicates that the first node provides the second compute resource for the first compute task.

26. The method according to claim 25, wherein the method further comprises:
sending second information to the first node, wherein the second information indicates that the first node is to provide the second compute resource for the first compute task.

27. The method according to claim 25 or 26, wherein the first request information comprises: information about a first communication resource and at least one of the following: an identifier of the first compute task, first feature information of the first compute task, and a performance requirement of the first compute task, wherein the first communication resource is a communication resource used by the fifth node for the first compute task, and the first feature information indicates computational complexity and/or a computational amount of the first compute task.

28. The method according to claim 27, wherein the performance requirement of the first compute task indicates a computation latency for executing the first compute task, or a total latency for executing the first compute task, wherein the total latency comprises a communication latency and the computation latency.

29. The method according to any one of claims 17 to 28, wherein the fourth request information comprises information about a compute task that the terminal device expects to invoke, and the method further comprises:
determining, based on compute task subscription information, the at least one compute task in the compute task that the terminal device expects to invoke, wherein the compute task subscription information indicates a compute task for which a current network is capable of providing a service.

30. A communication method, comprising:
receiving third information from a seventh node, wherein the third information is used to request to use a compute resource to execute a first compute task;
determining the compute resource based on the third information; and
determining, based on the compute resource and an available compute resource of a current node, to provide the compute resource for the first compute task or not to provide the compute resource for the first compute task.

31. The method according to claim 30, wherein the third information comprises information about a first communication resource and at least one of the following: an identifier of the first compute task, first feature information of the first compute task, and a performance requirement of the first compute task, wherein the first communication resource is a communication resource used by a fifth node for the first compute task, and the first feature information indicates computational complexity and/or a computational amount of the first compute task.

32. The method according to claim 31, wherein the method further comprises:
determining one or more function instances when the current node provides the compute resource for the first compute task, wherein at least one of the one or more function instances is associated with the first compute task.

33. The method according to claim 32, wherein the method further comprises:
receiving second request information from the fifth node, wherein the second request information is used to request to invoke a function for executing the first compute task; and
executing the first compute task based on the second request information and the at least one of the one or more function instances.

34. The method according to claim 32 or 33, wherein the method further comprises:
receiving first data from the fifth node, wherein the first data is data requested to be processed by the first compute task; and
processing the first data by using the at least one of the one or more function instances.

35. The method according to any one of claims 30 to 34, wherein the method further comprises:
sending third response information to the seventh node, wherein the third response information indicates that the current node provides the compute resource for the first compute task, or the current node does not provide the compute resource for the first compute task.

36. A communication method, comprising:
sending fourth request information to a core network, wherein the fourth request information comprises information about at least one compute task that a terminal device requests to invoke; and
receiving second response information from the core network, wherein the second response information comprises function invocation information of a fifth node, and the function invocation information comprises an address for remotely invoking the at least one compute task and/or compute task invocation identification information.

37. The method according to claim 36, wherein the method further comprises:
sending a network access request to the fifth node, wherein the network access request is used to request to access a current node.

38. The method according to claim 36 or 37, wherein the at least one compute task comprises a first compute task, and the method further comprises:
sending second request information to the fifth node, wherein the second request information is used to request to invoke a function for executing the first compute task.

39. The method according to any one of claims 36 to 38, wherein the at least one compute task comprises the first compute task, and the method further comprises:
sending first data to the fifth node, wherein the first data is data requested to be processed by the first compute task.

40. A communication apparatus, comprising a module configured to perform the method according to any one of claims 1 to 16, the method according to any one of claims 17 to 29, the method according to any one of claims 30 to 35, or the method according to any one of claims 36 to 39.

41. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 16, the method according to any one of claims 17 to 29, the method according to any one of claims 30 to 35, or the method according to any one of claims 36 to 39.

42. A communication system, comprising a terminal device, a fifth node, and a core network, wherein
the fifth node is configured to perform the communication method according to any one of claims 1 to 16;
the core network is configured to perform the communication method according to any one of claims 17 to 29; and
the terminal device is configured to perform the communication method according to any one of claims 36 to 39.

43. The system according to claim 42, comprising at least one collaborative node, wherein each of the at least one collaborative node is configured to perform the communication method according to any one of claims 30 to 35.

44. A computer-readable storage medium, wherein the computer-readable storage medium stores instructions or program code, and when the instructions or program code is executed by a processor, the processor is enabled to implement the method according to any one of claims 1 to 16, the method according to any one of claims 17 to 29, the method according to any one of claims 30 to 35, or the method according to any one of claims 36 to 39.

45. A chip, wherein the chip comprises a processor and a communication interface, the communication interface is configured to send information to another communication apparatus other than a communication apparatus comprising the chip and/or receive information from the other communication apparatus, and the processor is configured to perform the method according to any one of claims 1 to 16, the method according to any one of claims 17 to 29, the method according to any one of claims 30 to 35, or the method according to any one of claims 36 to 39.
